# EUROPÄISCHE PATENTSCHRIFT

(11) **EP 4 004 447 B1**
(45) Veröffentlichungstag und Bekanntmachung des Hinweises auf die Patenterteilung: **08.05.2024**
(21) Anmeldenummer: 20731795.9
(22) Anmeldetag: 13.05.2020
(51) Int. Cl.: F24D 19/10, G05D 7/06, G05D 23/19

(54) **EINSTELLVORRICHTUNG UND VERFAHREN ZUR VERBESSERTEN FEINREGULIERUNG EINES VENTILSPALTS**
ADJUSTMENT DEVICE AND METHOD FOR IMPROVED PRECISION ADJUSTMENT OF A VALVE GAP
DISPOSITIF DE RÉGLAGE ET PROCÉDÉ PERMETTANT LE RÉGLAGE FIN AMÉLIORÉ D'UN JEU DE SOUPAPE

(30) Priorität: 25.07.2019 DE 102019120117
(43) Veröffentlichungstag der Anmeldung: 01.06.2022
(73) Patentinhaber: STRAUB KG, 73337 Bad Überkingen (DE)
(72) Erfinder: STRAUB, Philipp, 73337 Bad Überkingen (DE); STRAUB, Thomas, 73337 Bad Überkingen (DE)
(74) Vertreter: Kuhnen & Wacker Patent- und Rechtsanwaltsbüro PartG mbB
(86) Internationale Anmeldenummer: PCT/EP2020/063333
(87) Internationale Veröffentlichungsnummer: WO 2021/013397

(56) Entgegenhaltungen:
- EP-B1- 0 902 240
- EP-B1- 1 936 288
- EP-B1- 3 557 154
- CN-A- 111 351 224
- DE-A1-102009 004 319
- DE-A1-102017 123 560
- DE-B4-102017 011 636
- GB-A- 2 541 102
- US-A1- 2009 314 484
- US-B2- 8 746 584

## Beschreibung

Die vorliegende Anmeldung betrifft eine Einstellvorrichtung zur temperaturabhängigen, selbstregulierenden Einstellung eines Durchflussregelventils in einem Temperierungssystem und ein entsprechendes Verfahren mit Fokus auf einer verbesserten Regulierung bis in einen dichtungswirksamen Bereich eines Ventils hinein.

Nebengeordnete Teile des Gegenstands dieser Patentanmeldung bauen auf der Patentanmeldung DE 10 2017 123 560 A1 derselben Anmelderin auf. Die vorliegende Erfindung basiert auf nicht veröffentlichten, internen Erkenntnissen und Verbesserungen aus einer Produktentwicklung zu der Technik aus der genannten Patentanmeldung der Anmelderin. Teile der vorliegenden Offenbarung, der Zeichnung und nebengeordneter Ansprüche umfassen demzufolge Teile des älteren Anmeldungsgegenstandes, auf dessen Technik hierin Bezug genommen wird.

Ein technischer Hintergrund der Erfindung liegt in der Anwendung von Heizungs- und Klimatisierungsanlagen für Räume, wie insbesondere Fußbodenheizungen, Flächenheizungen oder Kühldecken, die in einem Gebäude installiert sind, um eine witterungsunabhängige wählbare Raumtemperatur bereitzustellen.

Im Stand der Technik sind aus dem Heizungsbau zahlreiche Anordnungen und Steuerungsverfahren zur komfort- und effizienzorientierten Verteilung und Regelung einer Wärmeenergie durch ein hydraulisches Netz im Gebäude bekannt, wobei ähnliche Installationen in Gebäuden ebenso zur Verteilung und Regelung einer Klimatisierungsenergie bzw. einem Wärmeentzug aus Räumen bekannt sind.

Im Stand der Technik sind Verfahren zur Durchführung eines hydraulischen Abgleichs bekannt, in dem die Rücklauftemperatur an einem Wärmetauscher erfasst wird, und der Volumenstrom durch den Wärmetauscher in Abhängigkeit der Rücklauftemperatur gesteuert wird. In einer Alternative wird eine Temperaturdifferenz zwischen der Vorlauftemperatur und der Rücklauftemperatur ermittelt. Zwischen der ermittelten Temperaturdifferenz und einem Soll-Wert einer konstanten Temperaturdifferenz wird eine Regeldifferenz gebildet. Der Volumenstrom durch den Wärmetauscher wird anhand dieser Regeldifferenz gesteuert, um die Rücklauftemperatur an den Soll-Wert der konstanten Temperaturdifferenz, d.h. einer vorbestimmten, unveränderlichen Temperaturspreizung anzunähern.

Die Technik der zuvor genannten Patentanmeldung DE 10 2017 123 560 A1 beschreibt eine Einstellvorrichtung und ein Verfahren zur selbstregulierenden Einstellung eines Durchflusses in Verbraucherschleifen mit einem Wärmetauscher, die auf einer Berechnung einer anwendungsoptimierten Temperaturspreizung zwischen der Vorlauftemperatur und Rücklauftemperatur, also einer variablen Soll-Temperaturdifferenz in jeder Verbraucherschleife basiert. Die Einstellvorrichtung bildet dabei die maßgebliche Komponente eines Temperierungssystems, in dem das dementsprechende Verfahren umgesetzt wird, und das ein zugeordnetes Raumthermostat aufweist. Die Berechnung einer variablen Spreizung der Temperaturdifferenz dient dazu, in einer individuellen Installationsumgebung des Wärmetauschers einen optimalen Betriebspunkt selbstständig anzupassen. Der Einbezug der resultierenden Heizdauer gleicht Begebenheiten des Gebäudes, wie z.B. Stockwerk, Kellerlage oder Außenwandverhältnis sowie Begebenheiten der Installation aus, und ermöglicht es, eine schnellere Raumtemperierung innerhalb eines effizienten Bereichs selbstständig zu optimieren. Eine Mehrzahl entsprechender Einstellvorrichtungen führt ohne Erfordernis einer zentralen Steuerungseinheit eine bedarfsgerechte Verteilung der Teilströme in den Verbraucherschleifen aus.

Die vorliegende Erfindung beschäftigt sich mit einer verbesserten Regelung durch Vermeidung von Fehlfunktion der Regelung in Fällen, in denen kein Durchfluss durch eine dem Ventil zugeordnete Verbraucherschleife oder keine bzw. eine sehr kleine Temperaturdifferenz erfasst wird.

Bei der obengenannten Technik ist eine Anordnung des Ventils und eines Temperatursensors für die Vorlauftemperatur vorzugsweise derart vorgesehen, dass das Ventil an einem Zulaufverteilerrohr, d.h. in Strömungsrichtung vor der zugeordneten Verbraucherschleife angebracht ist und der Temperatursensor für die Vorlauftemperatur an einer von dem Zulaufverteilerrohr wegführenden Leitungsstrecke, d.h. in Strömungsrichtung hinter dem Ventil in einem Anfangsbereich der Verbraucherschleife angebracht ist. Es ist keine Erfassung des Durchflusses an dem Ventil oder einer zugeordneten Leitung bereitgestellt. Eine Regelung trifft mittels eines Vergleichs von erfassten Temperaturen logische Rückschlüsse auf den Durchfluss in der Verbraucherschleife.

Die Regelung eines energetisch effizienten Durchflusses durch eine Verbraucherschleife basiert auf der Annäherung einer erfassten Ist-Temperaturdifferenz zwischen einer Vorlauftemperatur und einer Rücklauftemperatur der Verbraucherschleife an eine Soll-Temperaturdifferenz, d.h. eine für die Verbraucherschleife optimierte Temperaturspreizung, bei der ein effizienter Wärmeeintrag bzw. Kälteeintrag in den zu temperierenden Raum zu erwarten ist.

Wenn ein hoher Durchfluss in einer Verbraucherschleife eines ggf. vortemperierten Raums vorliegt, erfolgt ein geringerer Wärmeübergang zwischen dem Wärmetauscher und dem durchfließenden Wärmeträger, während eine zu verrichtende hydraulische Arbeit der Pumpe hoch ist. Demzufolge liegt ein energetisch ineffizienter Zustand vor, der sich in einer vergleichsweise geringeren Temperaturdifferenz zwischen Vorlauf- und Rücklauftemperatur äußert. Die Regelungslogik sieht in diesem Fall vor, den Durchfluss zu drosseln, um einen effizienteren Zustand herzustellen, in dem eine geringere Pumpenleistung erforderlich ist und ein intensiverer Wärmeübergang zwischen dem Wärmetauscher und dem durchfließenden Wärmeträger erfolgt. Erwartungsgemäß spiegelt sich die Drosselung des Durchflusses in einer Annäherung der erfassten und regelungstechnisch zurückgeführten Ist-Temperaturdifferenz an eine höhere, für die Verbraucherschleife optimierte Soll-Temperaturdifferenz, d.h. die vorgegebene optimale Temperaturspreizung, wider.

Problematisch sind jedoch u.a ein dichtungswirksamer Bereich des Ventilstellwegs oder aber andere Störungen oder Ausfälle in einem Heizungs- oder Klimatisierungs- bzw. Temperierungssystem.

Wenn nun ein Fall eintritt, in dem die Regelung einen derart geringen Ventilspalt einstellt, dass an einer Ventildichtung bereits kein oder annähernd kein Durchfluss mehr in die Verbraucherschleife erfolgt, äußert sich dieser Zustand ebenfalls in einer kleinen und abnehmenden Temperaturdifferenz, die zwischen einem Anfang und einem Ende der Verbraucherschleife verbleibt.

Die Erfassung einer geringen Temperaturdifferenz aufgrund eines fehlenden Durchflusses ist regelungstechnisch identisch mit der Erfassung einer geringen Temperaturdifferenz, die den zuvor genannten, energetisch ineffizienten Zustand eines hohen Durchflusses widerspiegelt.

Die Regelungslogik folgt der Annahme, dass bei einer geringen erfassten Temperaturdifferenz ein höherer Durchfluss durch die Verbraucherschleife und folglich ein ineffizienterer Zustand vorliegt. Wie zuvor beschrieben, sieht die Regelungslogik in diesem Fall vor, den Durchfluss zu drosseln, um einen effizienteren Zustand herzustellen.

Wenn eine geringe Temperaturdifferenz erfasst wird und die Regelung eine Drosselung des Durchflusses durchführt, jedoch keine Erhöhung der Temperaturdifferenz eintritt, führt die Regelung routinemäßig weitere Drosselungen des Durchflusses durch, um eine Erhöhung der Temperaturdifferenz zu erzielen, wie sie gemäß der obengenannten Annahme zur Steuerung der Effizienz zu erwarten wäre. Im weiteren Regelungsverlauf nähert sich eine Ventilöffnung demzufolge einer vollständigen Schließposition des Ventils an.

Folglich gelangt die Regelung ohne Informationen zu einem tatsächlich erfassten Durchfluss oder zu möglichen Ursachen einer abweichenden Temperaturdifferenz, also lediglich basierend auf der obengenannten Annahme zur Steuerung eines effizienten Durchflusses zu einer Fehlinterpretation der beschriebenen Fälle und kann in eine regelungstechnische Sackgasse bezüglich einer zunehmenden Schließung der Ventilöffnung geraten.

Ein möglicher Lösungsansatz für diese Regelung könnte vorsehen, dass ein vorbestimmter Bereich des Stellglieds der Einstellvorrichtung nicht angesteuert wird, um einen unteren Bereich eines Stellwegs eines Ventils zu vermeiden. Somit soll an einem kompatiblen jedoch unbekannten Ventiltyp einer Installation verhindert werden, dass während des Betriebs eine dichtungswirksame Ventilöffnung eingestellt wird, bei der kein Durchfluss mehr erfolgt.

Dieser Lösungsansatz hat jedoch den Nachteil, dass bei Systemen mit deutlich unterschiedlich großen Heizkreisen, eine energetisch effiziente Regelung des kleinsten Heizkreises beeinträchtig ist, wie später erläutert wird. Bei herkömmlicher Raumaufteilung von Gebäuden stellen deutlich unterschiedlich große Räume und deren erforderliche Heizkreise in Form von Fußbodenheizungen oder dergleichen jedoch den Regelfall dar. Somit besteht Bedarf an einer eingangs genannten Regelung mit einer verbesserten Feinregulierung im Bereich eines Ventilspalts.

Es ist eine Aufgabe der Erfindung, eine Einstellvorrichtung und ein entsprechendes Verfahren zur selbstregulierenden Einstellung eines Durchflussregelventils zu schaffen, die eine effiziente Durchflussregelung bis in einen dichtungswirksamen Bereich eines Ventils hinein ermöglicht. Ein Schwellwert einer dichtungswirksamen Öffnungsposition eines Ventils, in der ein Durchfluss zwischen einem Ventilkörper und einem Ventilsitz durch eine Ventildichtung annähernd unterbunden wird, ist individuell und innerhalb eines erwartungsgemäßen unteren Bereichs eines Ventilstellwegs nicht bekannt. Eine dichtungswirksame Öffnungsposition hängt sowohl von einem beliebigen kompatiblen Ventiltyp als auch von einem Verschleiß oder einer Alterung der Dichtung ab.

Eine weitere Aufgabe der Erfindung besteht darin, eine Einstellvorrichtung und ein entsprechendes Verfahren zu schaffen, die mögliche Fehlfunktionen der temperaturbasierten Regelungslogik vermeiden, welche durch äußere Störeinflüsse oder defekte Komponenten in dem Temperierungssystem hervorgerufen werden können.

Diese Aufgaben werden durch das kennzeichnende Merkmal einer Einstellvorrichtung nach Anspruch 1, und das kennzeichnende Merkmal eines Verfahrens nach Anspruch 11 gelöst.

Die Einstellvorrichtung zur selbstregulierenden Einstellung eines Durchflussregelventils zeichnet sich insbesondere dadurch aus, dass sie eine Öffnungsposition des Durchflussregelventils, die basierend auf einer Regeldifferenz eingestellt ist, auf eine Öffnungsposition mit einem größeren Durchflussquerschnitt entlang eines Stellwegs erhöht; und von der erhöhten Öffnungsposition ausgehend, erneut eine Öffnungsposition des Durchflussregelventils basierend auf der Regeldifferenz einstellt; I) wenn die Öffnungsposition des Durchflussregelventils eine auf dem Stellweg vorbestimmte, dichtungswirksame Öffnungsposition, bei der kein Durchfluss durch das Durchflussregelventil zu erwarten ist, unterschreitet; oder II) wenn die Öffnungsposition des Durchflussregelventils eine auf dem Stellweg vorbestimmte, hydraulisch begrenzte Öffnungsposition, bei der ein Durchfluss durch das Durchflussregelventil zu erwarten ist, unterschreitet, und zugleich i) die erfasste Temperaturdifferenz die vorbestimmte oder variabel bestimmte Temperaturspreizung unterschreitet; oder ii) ein Wiederholungsintervall zur erneuten Erhöhung der Öffnungsposition abgelaufen ist.

Das entsprechende erfindungsgemäße Verfahren zur selbstregulierenden Einstellung eines Durchflusses zeichnet sich insbesondere aus durch die Schritte: Erhöhen der Öffnungsposition des Durchflussregelventils, die basierend auf der Regeldifferenz eingestellt ist, entlang eines Stellwegs auf eine Öffnungsposition mit einem größeren Durchflussquerschnitt; und erneutes Einstellen der Öffnungsposition des Durchflussregelventils basierend auf der Regeldifferenz, ausgehend von der erhöhten Öffnungsposition; I) wenn die Öffnungsposition des Durchflussregelventils eine auf dem Stellweg vorbestimmte, dichtungswirksame Öffnungsposition, bei der kein Durchfluss durch das Durchflussregelventil zu erwarten ist, unterschreitet; oder II) wenn die Öffnungsposition des Durchflussregelventils eine auf dem Stellweg vorbestimmte, hydraulisch begrenzte Öffnungsposition, bei der ein Durchfluss durch das Durchflussregelventil zu erwarten ist, unterschreitet, und zugleich i) die erfasste Temperaturdifferenz die vorbestimmte oder variabel bestimmte Temperaturspreizung unterschreitet; oder ii) ein Wiederholungsintervall zur erneuten Erhöhung der Öffnungsposition abgelaufen ist.

Die erfindungsgemäße vorübergehende Erhöhung der Öffnungsposition des Durchflussregelventils auf einen größeren, vorzugsweise geringfügig größeren Durchflussquerschnitt verhindert dass die auf einem Temperaturvergleich basierende selbstregulierende Einstellung des Durchflussregelventils in einem Grenzbereich einer Ventildichtung, d.h. nahe an einem Ventilspalt, in eine regelungstechnische Sackgasse gelangt.

Die erfindungsgemäßen Bedingungen ermöglichen eine Erkennung, wann eine solche regelungstechnische Sackgasse, die systembedingt nicht durch eine Hardware, wie einen Strömungsmesser erfasst werden kann, gegenüber einem regulären Betrieb angenommen werden kann, um eine zutreffende Reaktion mit hoher Wahrscheinlichkeit vorzunehmen.

In ihrer allgemeinsten Form sieht die vorliegende Erfindung erstmals vor, eine routinemäßige, temperaturabhängige selbstregulierende Einstellung eines Ventils unter definierten Bedingungen auszusetzen bzw. zu übersteuern, und an einer höheren Position eines Ventilstellwegs, an der zu erwarten bzw. sichergestellt ist, dass ein geringfügiger Durchfluss vorliegt, mit der routinemäßigen, temperaturabhängigen selbstregulierenden Einstellung erneut anzusetzen. Die Erfindung schlägt erstmals eine Funktionalität der Einstellvorrichtung als Ausweg in einer regelungstechnischen Sackgasse der genannten Anwendung vor und sie definiert erstmals Bedingungen, wann diese Funktionalität als Ausweg eingeleitet wird.

Der erfindungsgemäße Lösungsweg wurde basierend auf einer Sammlung und Analyse von störungsbehafteten Szenarien entwickelt, die im Betrieb der zugrunde gelegten Technik einer temperaturabhängigen Heizkreisregulierung auftreten können. Der Erfindung liegen demnach Untersuchungen, Erkenntnisse und geschlussfolgerte Parameterverknüpfungen zugrunde. Ferner wurde seitens der Erfinder eine Vielzahl der am Markt verfügbaren, hinsichtlich einer Kompatibilität zu der Einstellvorrichtung in Betracht kommenden Durchflussregelventile untersucht. Dabei wurden Bereiche eines dichtungswirksamen und eines hydraulischen Bereichs der Ventiltypen in Bezug auf einen genormten Ventilstellweg untersucht, und quantitative Erkenntnisse den näheren Ausführungsformen der Erfindung zugrunde gelegt.

Die Erfindung hat den Vorteil, dass auch bei einem hydraulischen Abgleich zwischen deutlich unterschiedlich großen Heizkreisen, der Durchfluss durch die kürzeste Verbraucherschleife in einem unteren Bereich eines Ventilstellwegs, an einen Ventilspalt heranreichend, effizient reguliert werden kann, ohne in eine regelungstechnische Sackgasse zu gelangen.

Die Erfindung hat zudem den Vorteil, dass die zugrunde gelegte temperaturabhängige Regelungslogik auch unter weiteren, von der Ventilstellung unabhängigen Störungsfällen funktionsbereit bleibt, ohne in eine regelungstechnische Sackgasse zu gelangen.

Die Erfindung hat auch den Vorteil, dass sie bei einer Veränderung von dichtungswirksamen und hydraulischen Wertebereichen eines Ventils innerhalb eines erwartungsgemäßen Bereichs, die durch Alterung und Verschleiß der Dichtung auftreten können, funktionsbereit bleibt.

Die Erfindung hat ferner den Vorteil, dass die Einstellvorrichtung zu vielen handelsüblichen, genormten Ventilen kompatibel ist. Die erfindungsgemäße Erhöhung der Öffnungsposition ist an eine Vielzahl von genormten Ventilen, deren dichtungswirksame und hydraulische Wertebereiche innerhalb eines erwartungsgemäßen Bereichs variieren, angepasst.

Die Erfindung hat darüber hinaus den Vorteil, dass die Einstellvorrichtung schnell installierbar, leicht nachrüstbar und kompatibel zu herkömmlichen Installationen von Temperierungssystemen ist, wie insbesondere Heizkreisverteilerrohre von Fußbodenheizungen. Sie erfordert keine Umbauten oder zusätzlichen Bauteile zu einer herkömmlichen Installation.

Die Erfindung hat ebenso den Vorteil, dass eine Reaktion auf einen fehlenden Durchfluss in einer dem Ventil zugeordneten Verbraucherschleife auch ohne eine vorrichtungstechnische Durchflussmessung ermöglicht wird. Dadurch muss keine gesonderte Installation erfolgen. Ferner können ein abzudichtender Durchbruch einer Flügelradwelle, oder ähnliche konstruktive Details und Schwachstellen entfallen.

Vorteilhafte Weiterbildungen der vorliegenden Erfindung sind Gegenstand der abhängigen Ansprüche.

Die Erfinder haben zahlreiche kommerziell erhältliche Produkte von Durchflussregelventilen mit genormten Abmessungen in Bezug auf einen Übergang zwischen einem dichtungswirksamen Bereich und einen hydraulischen Bereich im Verhältnis zu dem Stellweg des Ventils untersucht. Dabei wurde herausgefunden, dass ein für die erfindungsgemäße Funktionalität festzulegender Bereich in den nachfolgend definierten Bereichen sichergestellt werden kann.

Gemäß einem Aspekt der Erfindung kann die dichtungswirksame Öffnungsposition des Durchflussregelventils in einem Bereich von 1 % bis 6 % des Stellwegs des Durchflussregelventils ausgehend von der vollständig geschlossenen Position festgelegt sein.

Gemäß einem Aspekt der Erfindung kann eine hydraulisch begrenzte Öffnungsposition des Durchflussregelventils in einem Bereich von 6 % bis 20 % des Stellwegs des Durchflussregelventils ausgehend von der vollständig geschlossenen Position festgelegt sein.

Die Erfinder haben ferner Untersuchungen von fallabhängigen Verläufen der Ist-Temperaturdifferenz zwischen Vorlauf- und Rücklauftemperatur zu der durch die Regelung zeitgleich vorgegebenen Temperaturspreizung vorgenommen. Danach wurden Abweichungen definiert, in denen mit einer hohen Wahrscheinlichkeit eine Fehlinterpretation der temperaturabhängigen Regelungslogik aufgrund eines mangelnden Durchflusses, d.h. eine regelungstechnische Sackgasse, vorliegt.

Gemäß einem Aspekt der Erfindung kann die Unterschreitung der Temperaturspreizung durch die erfasste Temperaturdifferenz auf eine Differenz vorbestimmt sein, und die Differenz in einem Bereich von 10 % bis 90 % eines Betrags der Temperaturspreizung festgelegt sein.

Gemäß einem Aspekt der Erfindung kann die Einstellvorrichtung als Ergebnis der variablen Bestimmung der Temperaturspreizung einen Wertebereich zwischen einer minimalen Temperaturspreizung und einer maximalen Temperaturspreizung bestimmen, und die Unterschreitung kann sich auf die minimale Temperaturspreizung beziehen.

Die Erfinder haben ferner eine vorteilhafte Zeitdauer für eine Wiederholung der erfindungsgemäßen Funktionalität definiert, durch die weitere Arten von vorübergehenden Störungsfällen in einem Temperierungssystem mit hoher Wahrscheinlichkeit keine Auswirkung auf die nachfolgende Regelung haben können.

Gemäß einem Aspekt der Erfindung kann das Wiederholungsintervall vorbestimmt sein, auf eine Laufzeit in einem Bereich von 1 h bis 10 h festgelegt sein, und das Wiederholungsintervall kann bei einer Aktivierung der Einstellvorrichtung beginnen.

Ferner wurde eine vorteilhafte Sprunghöhe für die erfindungsgemäße Funktionalität der Erhöhung der Öffnungsposition definiert. Durch eine Begrenzung der Öffnungsposition, auf welche die Erhöhung durchgeführt wird, kann eine Zeitdauer, die vergeht bis eine Abweichung der Einstellung wieder der Vorgabe der Regelung entspricht, verkürzt werden. Mit anderen Worten wird durch eine Erhöhung auf eine geringfügig höhere Öffnungsposition auf dem Stellweg des Ventils, bei der lediglich ein geringfügiger Durchfluss sichergestellt ist, die erneute Einregelung auf eine regelungsgemäß korrekte Öffnungsposition verkürzt. Dies gilt, insofern die regelungsgemäß korrekte Öffnungsposition, welche in der nachfolgenden erneuten Einregelung eingenommen wird, bezüglich des Stellwegs unterhalb der Öffnungsposition liegt, auf welche die vorübergehende Erhöhung erfolgte. Das ist insbesondere der Fall, wenn eine Einstellung der Öffnungsposition nahe am Ventilspalt erfolgt. Eine solche Einstellung ist regelmäßig erforderlich, wenn ein geringer Durchfluss durch eine Verbraucherschleife bzw. an einer Verbraucherschleife ein hoher hydraulischer Widerstand gegenüber einem Förderdruck vorgeschaltet werden soll.

Gemäß einem Aspekt der Erfindung kann die erhöhte Öffnungsposition, auf welche die Einstellvorrichtung die Öffnungsposition des Durchflussregelventils entlang des Stellwegs erhöht, die hydraulisch begrenzte Öffnungsposition sein.

Die Erfinder haben ferner eine vorteilhafte Zeitdauer definiert, in der die erfindungsgemäße Funktionalität außer Betracht gelassen wird. Die Aussetzung bezieht sich auf eine Dauer nach Beginn einer Heizanforderung, in der sich mit einer hohen Wahrscheinlichkeit zunächst lokale Schwankungen in Temperaturverläufen an Knotenpunkten und Leitungsstrecken des Temperierungssystems ergeben, die zu Fehlinterpretationen der temperaturabhängigen Regelungslogik führen können.

Gemäß einem Aspekt der Erfindung kann eine Sperrdauer bereitgestellt sein; und die Einstellvorrichtung kann dazu eingerichtet sein, während der Sperrdauer die Öffnungsposition des Durchflussregelventils, die basierend auf der Regeldifferenz eingestellt ist, nicht zu erhöhen, II) wenn die Öffnungsposition des Durchflussregelventils die auf dem Stellweg vorbestimmte, hydraulisch begrenzte Öffnungsposition, bei der ein Durchfluss durch das Durchflussregelventil zu erwarten ist, unterschreitet, und zugleich i) die erfasste Temperaturdifferenz die vorbestimmte oder die variabel bestimmte Temperaturspreizung unterschreitet.

Gemäß einem Aspekt der Erfindung kann die Sperrdauer vorbestimmt sein, auf eine Laufzeit in einem Bereich von 5 min bis 60 min festgelegt sein, und die Sperrdauer bei einer Aktivierung der Einstellvorrichtung beginnen.

Die Erfindung sowie eine geeignete Technik zur Umsetzung der Erfindung werden anhand der Figurenbeschreibung mit Bezug auf die begleitende Zeichnung besser verständlich, wobei dieselben Bezugszeichen für dieselben Gegenstände Verwendung finden, in denen:
- Fig. 1: ein Diagramm zeigt, in dem eine Kennlinie eines Durchflusswerts und eines Ventilstellwegs von einem Durchflussregelventil an den Achsen aufgetragen sind;
- Fig. 2: ein Diagramm zeigt, in dem Wertebereiche eines Ventilstellwegs für die erfindungsgemäße bedingte Erhöhung einer Ventilöffnung definiert wurden;
- Fig. 3: eine Querschnittsansicht durch eine Einstellvorrichtung zeigt;
- Fig. 4: eine Darstellung eines Temperierungssystems mit Einstellvorrichtungen in einer Verteilervorrichtung, Thermostaten und weiteren Systemkomponenten zeigt; und
- Fig. 5: ein Blockschaltbild, das die Systemkomponenten zur Selbstregulierung darstellt.

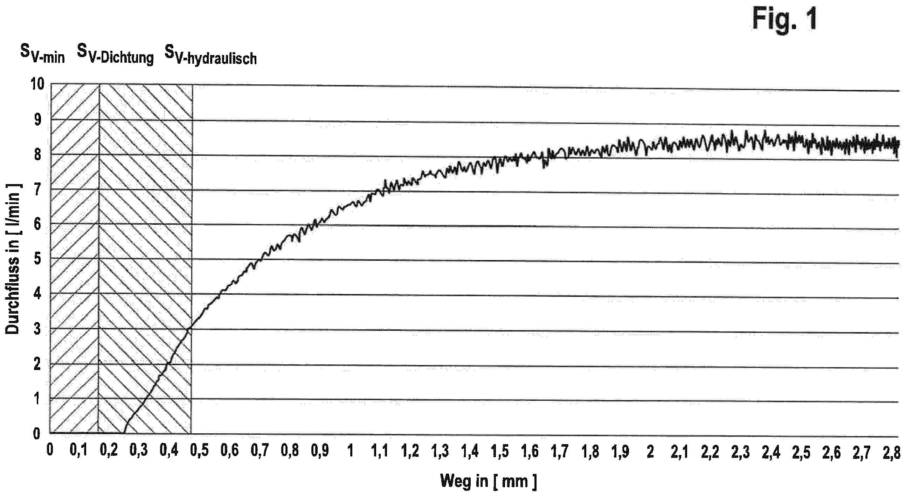

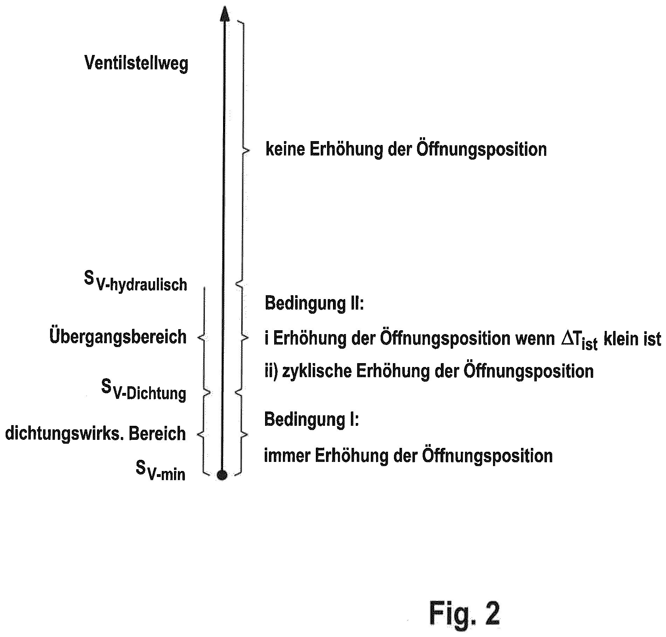

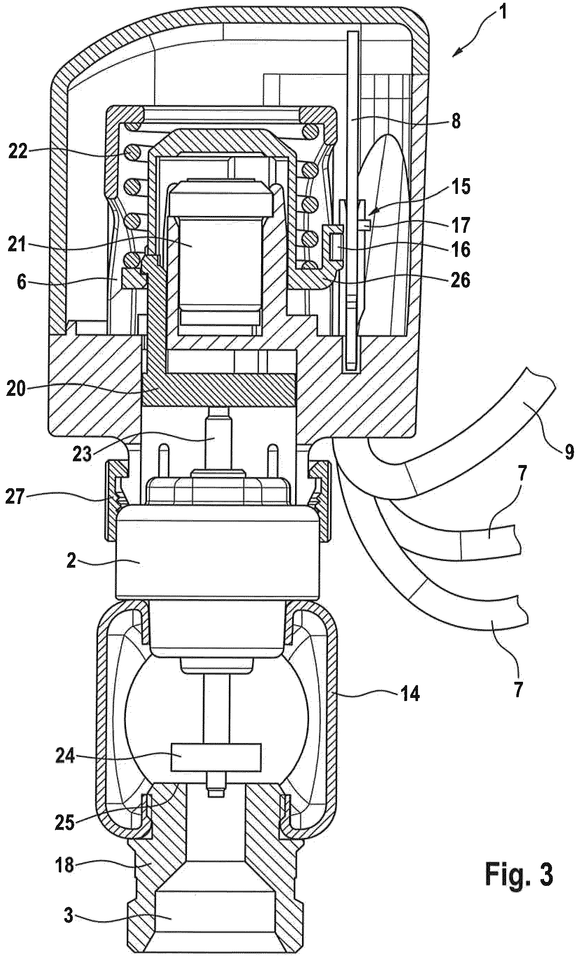

Nachstehend wird eine beispielhafte Ausführungsform der erfindungsgemäßen Funktionalität einer bedingten Erhöhung einer Ventilöffnung mit Bezug auf die Figuren 1 und 2 beschrieben, die an einer Einstellvorrichtung 1 in einem Temperierungssystem 10, die in den Figuren 3 bis 5 dargestellt sind, realisiert wird.

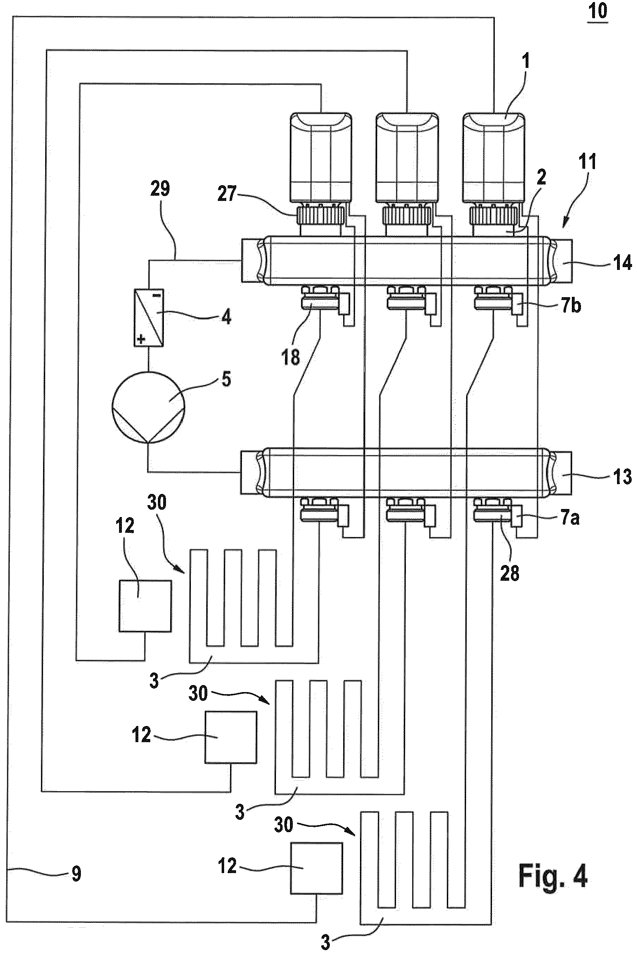

Wie später erläutert, ist jedes Durchflussregelventil 2 vor bzw. am Anfang von jeder Verbraucherschleife 3, die in Fig. 4 dargestellt ist, angeordnet und regelt den Durchfluss eines flüssigen Wärmeträgers durch die Verbraucherschleife 3. Die Öffnungsposition von jedem Durchflussregelventil 2 wird jeweils durch eine autonom regelnde Einstellvorrichtung 1 dezentral, d.h. insbesondere nicht von einer zentralen Steuerungseinheit des Temperierungssystems 10 aus, anhand von einem Vergleich der Temperaturen des durchfließenden Wärmeträgers am Anfang und am Ende der Verbraucherschleife 3 eingestellt.

Die Einstellvorrichtung 1 ist zu einer Montage auf einem genormten Ventiltyp, der vorzugsweise an Verteilerrohren von Heizkreisverteilern eingesetzt wird, ausgelegt und ist mit einer Vielzahl von derartigen, kommerziell erhältlichen Ventilen kompatibel. Im Rahmen der Erfindung wurden ca. 20 am Markt verbreitete Produkte von entsprechenden Durchflussregelventilen 2 untersucht und relevante Parameter im Hinblick auf die erfindungsgemäße Funktionalität der Einstellvorrichtung 1 analysiert. So zeigt Fig. 1 ein Diagramm, in dem an einer waagerechten Achse eine Durchflussrate eines Durchflussregelventils 2 zu einem Ventilstellweg angetragen ist.

Der Stellweg des Durchflussregelventils 2 ist im Sinne dieser Offenbarung eine absolute Strecke des Ventilhubs, d.h. ein Stellweg zwischen einer vollständig geschlossenen Position S_{V min}, in der ein Ventilkörper bzw. Ventilteller 24 auf einem Ventilsitz 25 aufliegt, und einer vollständig geöffneten Position, in welcher ein Durchflussquerschnitt durch den Ventilteller 24 vollständig oder soweit wie möglich einstellbar freigegeben ist. Ferner stellt im Sinne dieser Offenbarung die vollständig geschlossene Position S_{V min} des Durchflussregelventils 2 eine Anordnung dar, in der ein Stellglied 6 der Einstellvorrichtung 1 gerade mit einem Ventilstift 23 in Kontakt gelangt, d.h. ein Punkt bevor ein Ventilstellweg beginnt.

Bei einer in Fig. 1 dargestellten beispielgebenden Kennlinie ist abzulesen, dass innerhalb eines Bereichs des Stellwegs von 0 bis 0,25 mm kein Durchfluss des Wärmeträgers erfolgt. In einem Bereich von 0,25 mm bis etwa 2 mm steigt der Durchfluss zunächst bis etwa 0,7 mm annähernd linear und darüber abflachend an. Über eine Öffnung des Stellwegs von etwa 2,0 mm hinaus stagniert der Durchfluss auf einem Maximum.

Die verschiedenen Produkte kommerziell erhältlicher Durchflussregelventile 2, die zu der Einstellvorrichtung 1 kompatibel sind, unterscheiden sich hinsichtlich der dargestellten Kennlinie, sie stehen jedoch in einer Korrelation des Verlaufs der Kennlinie. Aus der Korrelation wurden für die Funktionalität einer bedingten Erhöhung der Ventilöffnung gemeinsam zutreffende Bereiche entlang des Stellwegs eines Durchflussregelventils 2 definiert.

Fig. 2 zeigt einen Zusammenhang zwischen den Bereichen des Ventilstellwegs und den Bedingungen für die Funktionalität einer Erhöhung der Ventilöffnung. Am unteren Ende des Stellwegs ist zwischen der vollständig geschlossenen Position Sv-min und einer dichtungswirksamen Öffnungsposition S_{V-Dichtung} ein dichtungswirksamer Bereich definiert. Darüber ist zwischen der noch dichtungswirksamen Öffnungsposition S_{V-Dichtung} und einer hydraulisch begrenzten Öffnungsposition S_{V-hydraulisch} ein Übergangsbereich des Stellwegs definiert. Darüber ist wiederum ein offener Bereich definiert, der sich von der hydraulisch begrenzten Öffnungsposition S_{V-hydraulisch} aus zum oberen Ende des Stellwegs des Durchflussregelventils 2 erstreckt.

An der vollständig geschlossenen Position S_{V-min} ist das Stellglied 6 kraftlos mit dem Ventilstift 23 gekoppelt. In einer darüber liegenden Öffnungsposition wird der Ventilteller 24 von dem Ventilsitz 25 abgehoben, allerdings versperrt noch eine Dichtung einen Ventilspalt. An der als dichtungswirksam definierten Öffnungsposition S_{V-Dichtung} ist anzunehmen, dass eine Kompression der Dichtung am Ventilspalt abgenommen oder sich entspannt hat, jedoch im Wesentlichen noch keine Öffnung am Ventilspalt freigegeben ist, die unter dem anliegenden Förderdruck einen Durchfluss des flüssigen Wärmeträgers zulässt. An der hydraulisch begrenzten Öffnungsposition S_{V-hydraulisch} ist bereits sichergestellt, dass ein geringfügiger Durchfluss erfolgt, der entlang des darüber liegenden Stellwegs zunimmt.

Ein absoluter Wert der als dichtungswirksam definierten Öffnungsposition S_{V-Dichtung} und der als hydraulisch begrenzten Öffnungsposition S_{V-hydraulisch} ist nicht bekannt und variiert in Abhängigkeit des Ventils und einer Alterung sowie einem Verschleiß einer Dichtung. Die Werte für die Öffnungsposition S_{V-Dichtung} und die Öffnungsposition S_{V-hydraulisch} sind vorab hinterlegt und basieren auf Werten, die durch Korrelationen der Werte in den durchgeführten Untersuchungen verschiedener verfügbarer Durchflussregelventile 2 ermittelt wurden. Die Werte sind derart gewählt, dass bei einer beliebigen Auswahl eines kompatiblen, genormten Durchflussregelventils 2 die vorab definierte Eigenschaft einer wirksamen Dichtung oder einer hydraulischen Begrenzung sicher oder zumindest mit hoher Wahrscheinlichkeit zutrifft. In einer anderen Variante, die Gegenstand einer zeitgleichen Patentanmeldung ist, kann zumindest der Wert der hydraulisch begrenzten Öffnungsposition S_{V-hydraulisch} in Bezug auf eine minimale Öffnungsposition eines verwendeten Durchflussregelventils 2 im Rahmen eines Initialisierungsvorgangs im Betrieb der Einstellvorrichtung 1 ermittelt werden.

In dem dichtungswirksamen Bereich des Stellwegs zwischen der vollständig geschlossenen Position S_{V-min} und der Öffnungsposition S_{V-Dichtung} erfolgt kein Durchfluss durch die Verbraucherschleife 3. Infolgedessen tritt bei der Regelungslogik, die nicht auf einer tatsächlichen Durchflussmessung, sondern auf dem Temperaturvergleich eines vermeintlichen Durchflusses basiert, eine Störung auf. Die Regelungslogik der Einstellvorrichtung 1 würde in eine regelungstechnische Sackgasse gelangen, bei welcher der Durchfluss immer weiter gedrosselt wird, während die erfasste Temperaturdifferenz aufgrund der Ursache eines mangelnden Durchflusses unverändert bleibt.

Eine Ursache eines mangelnden Durchflusses kann eine Feinregulierung an einem Ventilspalt sein. Beispielsweise erfordert die Regelung einer Verbraucherschleife 3, die im Vergleich zu anderen Verbraucherschleifen 3 einen deutlich geringeren hydraulischen Widerstand hat, eine Durchflussregelung im Bereich einer geringen Ventilöffnung. Dieser Umstand ist auf einem erforderlichen Abgleich der hydraulischen Widerstände zwischen Heizkreisen begründet, die an einem Verteilerrohr angeschlossenen sind. Der hydraulische Abgleich bestimmt eine maximale Öffnung des jeweiligen Durchflussregelventils 2 an einem Verteilerrohr in Abhängigkeit des hydraulischen Widerstands des zugeordneten Heizkreises. Dementsprechend erfolgt eine Durchflussregelung an einer sehr kurzen Verbraucherschleife 3 eines Heizkreises, wie z.B. an einer Fußbodenheizung in einem Gäste-WC, in einem unteren Bereich eines Stellwegs eines Durchflussregelventils 2, während einer Durchflussregelung an einer langen Verbraucherschleife, wie z.B. an einer Fußbodenheizung in einem Wohnzimmer, in einem oberen Bereich des Stellwegs eines Durchflussregelventils 2 an demselben Verteilerrohr erfolgt.

Eine weitere Ursache eines mangelnden Durchflusses kann ein Überschwingen einer sehr dynamischen Einregelung des Durchflussregelventils 2 infolge größerer Schwankungen von Systemparametern sein. Diese kann beispielsweise zu Beginn einer Heizanforderung auftreten, wenn eine erfasste Temperaturdifferenz in einer Verbraucherschleife 3 groß ist. Bei einem Überschwingen der Regelung kann die Öffnungsposition S_{V-Dichtung} in Schließrichtung überfahren werden, sodass die Öffnungsposition des Durchflussregelventils 2 in dem als dichtungswirksam definierten unteren Bereich des Stellwegs liegt, in dem bereits eine Kompression einer Ventildichtung auftritt und der Durchfluss unterbrochen wird.

Unter einer ersten Bedingung I) ist daher vorgesehen, dass die Einstellvorrichtung 1 immer dann eine Erhöhung der aktuellen Öffnungsposition des Durchflussregelventils 2 vornimmt, sobald erfasst wird, dass die Öffnungsposition in den dichtungswirksamen Bereich des Stellwegs des Durchflussregelventils 2 gelangt. Somit wird verhindert, dass die Regelungslogik der Einstellvorrichtung 1 in eine regelungstechnische Sackgasse gelangt, bei welcher der Durchfluss immer weiter gedrosselt wird, während die erfasste Temperaturdifferenz aufgrund der Ursache eines mangelnden Durchflusses unverändert bleibt.

Innerhalb des Übergangsbereichs des Stellwegs zwischen der Öffnungsposition S_{V-Dichtung} und der Öffnungsposition S_{V-hydraulisch} besteht ein unsicherer Zustand, ob ein geringfügiger Durchfluss erfolgt. Es ist zwar sichergestellt, dass ein hydraulischer Schwellwert, der einem minimalen Durchfluss zugeordnet ist, innerhalb des Bereiches liegt. Da jedoch ein absoluter hydraulischer Schwellwert unbekannt ist, kann ohne Durchflussmessung nicht festgestellt werden, ob bei einer aktuellen Öffnungsposition innerhalb des Übergangsbereichs ein Durchfluss erfolgt oder nicht. In diesem Bereich kann die Regelungslogik der Einstellvorrichtung 1 in eine regelungstechnische Sackgasse gelangen, bei welcher der Durchfluss immer weiter gedrosselt wird, während die erfasste Temperaturdifferenz aufgrund einer temperaturbezogenen Ursache unverändert bleibt.

Eine solche temperaturbezogene Ursache kann die Funktion einer sogenannten Nachtabsenkung eines Temperierungssystems 10 sein, während der eine Heizleistung einer Heizquelle nachts abgesenkt oder abgeschaltet wird. Eine infolge der Nachtabsenkung herabgesetzten Vorlauftemperatur des Heizkreises und eine Wärmekapazität einer vorgeheizten Gebäudestruktur können zu Beginn der Nachtabsenkung zu einer sehr kleinen Temperaturdifferenz in der Verbraucherschleife 3 führen. Wie analog zu dem Fall eines fehlenden Durchflusses erläutert, ist eine Erfassung einer geringen Temperaturdifferenz aufgrund einer beginnenden Nachtabsenkung regelungstechnisch identisch mit der Erfassung einer geringen Temperaturdifferenz, die einen energetisch ineffizienten Zustand eines hohen Durchflusses widerspiegelt. Infolgedessen würde die Regelungslogik aufgrund einer unverändert geringen Temperaturdifferenz eine fortlaufende Drosselung des Durchflusses durchführen. Die fehlerhafte Regelung würde wiederum bis zu einem Verschluss des Ventils führen. Da eine solche Nachtabsenkung in jedem System individuell eingestellt sein kann, ist kein sicherer Rückschluss lediglich anhand der Vorlauftemperatur möglich. Die Nachtabsenkung kann daher trotz eines Durchflusses in der Verbraucherschleife 3 zu einer Fehlfunktion der temperaturbasierten Regelungslogik führen.

Eine weitere temperaturbezogene Ursache kann eine starke Sonneneinstrahlung auf einen zu temperierenden Raum sein, was vorübergehend zu einer sehr geringen Temperaturdifferenz der in der Verbraucherschleife 3 des betreffenden Heizkreises führt und somit wiederum in gleicher Weise, wie zu der Nachtabsenkung erläutert, eine Störung der temperaturbasierten Regelungslogik verursachen kann.

Unter einer ersten Alternative i) einer zweiten Bedingung II) ist daher vorgesehen, dass die Einstellvorrichtung 1 immer dann eine Erhöhung der aktuellen Öffnungsposition des Durchflussregelventils 2 vornimmt, sobald erfasst wird, dass die Öffnungsposition in den Übergangsbereich des Stellwegs des Durchflussregelventils 2 gelangt und die in der Verbraucherschleife 3 erfasste Temperaturdifferenz ΔT_{Ist} in einem definierten Verhältnis zu der Regelungsvorgabe, d.h. der vorbestimmten oder variabel bestimmten Temperaturspreizung ΔT_{Soll} zu klein ist. Somit wird verhindert, dass die Regelungslogik der Einstellvorrichtung 1 in eine regelungstechnische Sackgasse gelangt, bei welcher der Durchfluss immer weiter gedrosselt wird, falls die erfasste Temperaturdifferenz ΔT_{Ist} in der Verbraucherschleife 3 aufgrund einer temperaturbezogenen Ursache unverändert bleibt.

Zudem bestehen weitere unregelmäßig auftretende Störungsfälle, wie eine defekte Pumpe, eine defekte Heizquelle, oder lokale Schwankungen bei der Temperaturerfassung, insbesondere einer Vorlauftemperatur im Temperierungssystem aufgrund von geänderten Heizanforderungen in verschiedenen Räumen, Jahresübergangszeiten usw., die zu Fehlern bei der Erfassung der Temperaturdifferenz ΔT_{Ist} führen können. Um Auswirkungen von Störungsfällen auf die Regelungslogik einzugrenzen, wird darüber hinaus eine bedingungsfreie, rein zeitlich getaktete Überprüfung durchgeführt, ob eine kritische Öffnungsposition vorliegt.

Unter einer zweiten Alternative ii) der zweiten Bedingung II) ist daher vorgesehen, dass die Einstellvorrichtung 1 regelmäßig nach einem Wiederholungsintervall eine Erhöhung der aktuellen Öffnungsposition des Durchflussregelventils 2 vornimmt, wenn zum Ablauf des Wiederholungsintervalls erfasst wird, dass die Öffnungsposition in dem Übergangsbereich des Stellwegs des Durchflussregelungsventils 2 liegt, und zwar unabhängig von der erfassten Temperaturdifferenz ΔT_{Ist}. Somit wird verhindert, dass die Regelungslogik der Einstellvorrichtung 1 über einen längeren Zeitraum in einer regelungstechnischen Sackgasse verbleibt, bei welcher der Durchfluss immer weiter gedrosselt wird, falls die erfasste Temperaturdifferenz ΔT_{Ist} in der Verbraucherschleife 3 aufgrund eines sonstigen Störungsfalls unverändert bleibt.

Innerhalb des als offen definierten Bereichs des Stellwegs oberhalb der Öffnungsposition S_{V-hydraulisch} erfolgt stets ein Durchfluss durch die Verbraucherschleife 3. In diesem Bereich erfolgt keine Erhöhung der Öffnungsposition des Durchflussregelventils 2 gegenüber dem zugrundeliegenden Regelungsbetrieb.

Somit sind drei Bedingungen definiert, die jede für sich zu der Funktionalität einer Erhöhung der Öffnungsposition gegenüber derjenigen Öffnungsposition führen, welche mittels der selbstregulierenden Einstellung der Einstellvorrichtung 1 eingestellt ist.

Die erste Bedingung I) tritt ein, wenn die Öffnungsposition in den dichtungswirksamen Bereich des Durchflussregelventils 2 gelangt. Die Einststellvorrichtung 1 führt dann immer eine Erhöhung der Öffnungsposition des Durchflussregelventils 2 durch.

Somit wird verhindert, dass die selbstregulierende Einstellung das Durchflussregelventil 2 immer weiter schließt, obwohl die erfasste Temperaturdifferenz ΔT_{Ist} nicht erwartungsgemäß der zugrundeliegenden Regelungslogik zunimmt, sondern aufgrund mangelnden Durchflusses in der Verbraucherschleife 3 gegen Null tendiert.

Die zweite Bedingungen II) setzt voraus, dass sich die Öffnungsposition in dem Übergangsbereich des Durchflussregelventils 2 befindet während zudem eine von zwei alternativen, weiteren Bedingungen i) oder ii) eintritt.

Wenn sich die Öffnungsposition in dem Übergangsbereich des Durchflussregelventils 2 befindet, führt die Einstellvorrichtung 1 dann eine Erhöhung der Öffnungsposition des Durchflussregelventils 2 durch, wenn nach der alternativen weiteren Bedingung i) die erfasste Temperaturdifferenz ΔT_{Ist} die zuvor bestimmte Temperaturspreizung ΔT_{Soll}, vorzugsweise um mehr als eine vorbestimmte Differenz, unterschreitet.

In einer alternativen Ausführungsform kann auch von der Regelung der Einstellvorrichtung 1 eine Regelungsbandbreite für die Temperaturspreizung ΔT_{Soll} vorgegeben sein. Das bedeutet, dass sich Parameter der Regelung, wie eine Regeldifferenz ΔT_{Regeldif-ferenz}, solange nicht ändern bis sich die erfasste Temperaturdifferenz ΔT_{Ist} aus einer Regelungsbandbreite zwischen einer minimalen Temperaturspreizung ΔT_{Soll-min} und einer maximalen Temperaturspreizung ΔT_{Soll-max} nach unten heraus bewegt. Bei dieser Ausführungsform bezieht sich eine Unterschreitung der alternativen Bedingung i) auf eine untere Grenze der Regelungsbandbreite, also auf eine Unterschreitung der minimalen Temperaturspreizung ΔT_{Soll-min}, vorzugsweise um eine vorbestimmte Differenz.

Die vorbestimmte Differenz kann in beiden alternativen Ausführungsformen einen Bruchteil der Temperaturspreizung ΔT_{Soll} betragen. Beispielsweise ist die alternative Bedingung i) als eine Unterschreitung von 50 % der Temperaturspreizung ΔT_{Soll} definiert.

Somit wird verhindert, dass die selbstregulierende Einstellung das Durchflussregelventil 2 immer weiter schließt, obwohl die erfasste Temperaturdifferenz ΔT_{Ist} nicht erwartungsgemäß der zugrundeliegenden Regelungslogik zunimmt, sondern aufgrund temperaturbezogener Ursachen gegen Null tendiert.

Wenn sich die Öffnungsposition in dem Übergangsbereich des Durchflussregelventils 2 befindet, führt die Einstellvorrichtung 1 auch zyklisch immer wieder dann eine Erhöhung der Öffnungsposition des Durchflussregelventils 2 durch, wenn nach der alternativen weiteren Bedingung ii) ein Wiederholungsintervall, das mit einer Aktivierung der Einstellvorrichtung 1 beginnt, abläuft. Mit anderen Worten wird zyklisch zum Ablauf des Wiederholungsintervalls immer wieder erfasst, ob sich die Öffnungsposition in dem Übergangsbereich des Durchflussregelventils 2 befindet. Das Wiederholungsintervall der alternativen Bedingung ii) ist auf mehrere Stunden, beispielsweise auf vier Stunden eingestellt und läuft immer wieder erneut ab bis die Einstellvorrichtung 1 deaktiviert wird. Danach beginnt das Wiederholungsintervall wieder mit einer Aktivierung der Einstellvorrichtung 1 durch eine Heizanforderung eines Raumes oder dergleichen.

Die bedingte Erhöhung der Öffnungsposition aus dem dichtungswirksamen Bereich oder dem Übergangsbereich des Durchflussregelventils 2 heraus erfolgt logischerweise auf eine Öffnungsposition, die oberhalb des Übergangsbereichs liegt oder zumindest die obere Grenze des Übergangsbereichs bildet. Die obere Grenze des Übergangsbereichs wird durch die hydraulisch begrenzte Öffnungsposition S_{V-hydraulisch} gebildet. Die hydraulisch begrenzte Öffnungsposition S_{V-hydraulisch} ist derart definiert und vorab eingestellt, dass ein Durchflussquerschnitt, vorzugsweise ein geringer Durchflussquerschnitt, sichergestellt ist. Daher ist es funktional ausreichend, die Erhöhung der Öffnungsposition des Durchflussregelventils 2 auf die hydraulisch begrenzte Öffnungsposition S_{V-hydraulisch} durchzuführen. Es ist darüber hinaus vorteilhaft, wenn die Erhöhung auf eine Öffnungsposition mit einem geringen Durchflussquerschnitt vorgenommen wird, denn so wird eine darauffolgende Einregelung im Falle einer Einstellung auf kleinere Öffnungsposition, d.h. insbesondere im Falle einer Feinregulierung eines Ventilspalts nicht unnötig lange ausgesetzt bzw. beeinträchtigt. Demzufolge stellt die hydraulisch begrenzte Öffnungsposition S_{V-hydraulisch} vorzugsweise den Zielwert für die erhöhte Öffnungsposition des Durchflussregelventils 2 dar, die bei Eintritt der Bedingungen I), II) mit i) oder II) mit ii) von der Einstellvorrichtung 1 eingestellt wird.

Die Werte der hydraulisch begrenzten Öffnungsposition S_{V-hydraulisch} und der dichtungswirksamen Öffnungsposition S_{V-Dichtung} können im Verhältnis zu einem Stellweg des Durchflussregelventils 2, d.h. einem Ventilhub, der von der Einstellvorrichtung 1 mittels des Stellglieds 6 erfassbar ist, definiert und eingestellt sein. Beispielsweise kann die hydraulisch begrenzte Öffnungsposition S_{V-hydraulisch} auf 4 % des Stellwegs ab der geschlossenen Position Sv-min eingestellt sein. Die dichtungswirksame Öffnungsposition S_{V-Dichtung} kann beispielsweise auf 12 % des Stellwegs ab der geschlossenen Position S_{V-min})eingestellt sein.

Anderenfalls können die Werte der definierten Öffnungspositionen des Durchflussregelventils 2 auf absolute Werte des Stellwegs eingestellt sein. Beispielsweise beträgt der Stellweg eines geeigneten Ventiltyps ca. 4 mm. Dementsprechend kann die hydraulisch begrenzte Öffnungsposition S_{V-hydraulisch} auf 0,4 oder 0,5 mm des Stellwegs ab der geschlossenen Position Sv-min eingestellt sein. Die dichtungswirksame Öffnungsposition S_{V-Dichtung} kann beispielsweise auf 0,1 oder 0,2 mm des Stellwegs ab der geschlossenen Position Sv-min eingestellt sein.

In einer bevorzugten Ausführungsform wird innerhalb eines Zeitraums nach der Aktivierung der Einstellvorrichtung 1 keine Erhöhung der Öffnungspositionen des Durchflussregelventils 2 durchgeführt, wenn die obengenannten Bedingung II) mit i) eintritt, also eine Öffnungsposition im Übergangsbereich liegt und eine verhältnismäßig kleine Temperaturdifferenz ΔT_{Ist} vorliegt. Hierdurch werden Beeinflussungen der Erfassung der Temperaturdifferenz ΔT_{Ist} aufgrund von lokalen Temperaturschwankungen in einer Anlaufphase des Temperierungssystems 10 oder der Verbraucherschleife 3 usw. unterdrückt. Eine derartige Sperrdauer ist auf mehrere Minuten, beispielsweise auf 20 min oder 30 min eingestellt und beginnt mit einer Aktivierung der Einstellvorrichtung 1 durch eine Heizanforderung eines Raumes oder dergleichen.

Nachfolgend wird mit den Figuren 3 bis 5 Bezug auf eine geeignete Ausführungsform aus der genannten Technik genommen, die Gegenstand von nebengeordneten Ansprüchen ist.

Die Einstellvorrichtung 1 ist auf einem Durchflussregelventil 2 montiert. Die Einstellvorrichtung 1 ist mittels eines Flansches 27 am Durchflussregelventil 2 befestigt. Das Durchflussregelventil 2 ist seinerseits in der hier abgebildeten Ausführungsform in einen Rücklaufverteiler 14 eingebaut. Der Rücklaufverteiler 14 weist ein in ihn eingeschraubtes Anschlussstück 18 auf, das den Rücklaufverteiler 14 mit einer nicht näher dargestellten Verbraucherschleife 3 verbindet. Das Durchflussregelventil 2 kann auch anderweitig in den Rücklaufverteiler 14 eingebaut sein. Das Anschlussstück 18 kann in den Rücklaufverteiler 14 auch eingepresst, eingeklebt, eingelötet, angeschweißt oder anderweitig befestigt sein.

Die Einstellvorrichtung 1 umfasst ein elektrisch ansteuerbares Stellglied 6. Im vorliegenden Beispiel fallen die Längsachse der Einstellvorrichtung 1 und des Stellglieds 6 zusammen. Das elektrisch ansteuerbare Stellglied 6 enthält ein in axialer Richtung bewegliches Betätigungsmittel 20. Die Längsachse des Betätigungsmittels 20 fällt ebenfalls mit der Längsachse des elektrisch ansteuerbaren Stellgliedes 6 zusammen. Das Betätigungsmittel 20 ist innerhalb des elektrisch ansteuerbaren Stellgliedes 6 angeordnet, weist ein in axialer Richtung längenveränderbares Bauteil, beispielsweise ein Dehnstoffelement 21, insbesondere eine Wachspatrone, auf, und ist durch eine koaxial dazu konzentrisch angeordnete Spiralfeder 22 vorgespannt. Das längenveränderbare Bauteil kann anstelle eines Dehnstoffelements 21 auch als ein elektrischer Miniaktuator ausgebildet sein, wenngleich diese häufig aus Kostengründen und wegen der vermuteten Geräuschentwicklung eher nicht erwogen werden. Statt der Spiralfeder 22 kann auch ein anderes geeignetes Mittel, beispielsweise ein Ringfederpaket oder dergleichen, eine Vorspannung erzeugen.

Durch elektrische Leitungen erhält das elektrisch ansteuerbare Stellglied 6 Signale von einem nicht näher dargestellten Temperaturerfassungsmittel 7 bzw. Temperatursensor am Rücklaufverteiler 14 hinsichtlich der ausgangsseitigen Rücklauftemperatur T_{Rücklauf} des durchfließenden Wärmeträgers. Das elektrisch ansteuerbare Stellglied 6 erhält über die Leitungen auch Temperatursignale von einem Temperaturerfassungsmittel 7 bzw. Temperatursensor am hier nicht dargestellten Vorlaufverteiler 13 hinsichtlich einer eingangsseitigen Vorlauftemperatur T_{Vorlauf} des durchfließenden Wärmeträgers. Eine weitere elektrische Leitung bildet in der vorliegenden Ausführungsform eine Schnittstelle 9 zu einem in Fig. 3 nicht, jedoch in Fig. 4 dargestellten Thermostat 12.

In der Einstellvorrichtung 1 enthaltene Berechnungsmittel 8 verarbeiten die über die Leitungen und erhaltenen Signale und geben an das elektrisch ansteuerbare Stellglied 6 entsprechende Befehle oder Steuersignale aus, anhand derer das Dehnstoffelement 21 im Betätigungsmittel 20 aktiviert oder deaktiviert wird. Auf diese Weise wird letztendlich ein definierter Verstellweg oder Hub des Betätigungsmittels 20 in axialer Richtung realisiert. Dabei drückt das Betätigungsmittel 20 in axialer Richtung auf einen Betätigungsstift bzw. Ventilstift 23 des Durchflussregelventils 2 und betätigt damit selbiges. In der vorliegenden Ausführungsform fallen die Längsachse des Betätigungsmittels 20 und des Betätigungsstiftes 23 wie auch des Durchflussregelventils 2 zusammen.

Über die axiale Betätigung des Ventilstiftes 23 wird ein in der beispielhaften Ausführungsform als Ventilteller 24 ausgebildeter Ventilkopf von einem Ventilsitz 25 abgehoben und damit eine Ventilstellung definiert, die einer bestimmten Öffnungsposition des Durchflussregelventils 2 bzw. einem bestimmten Ventil-Öffnungsquerschnitt entspricht.

Der jeweilige Hub des Durchflussregelventils 2 bzw. der hieraus resultierende Öffnungsquerschnitt wird über ein Positionserfassungsmittel 15 in der Einstellvorrichtung 1 erfasst. Das Positionserfassungsmittel 15 besteht in der vorliegenden Ausführungsform aus einem Magneten 16, der über einen radial nach außen ragenden Ausleger 26 dem elektrisch ansteuerbaren Stellglied 6 zugeordnet und mit dem Betätigungsmittel 20 verbunden ist. Auf diese Weise bewegt sich der Magnet 16 in axialer Richtung parallel zum Dehnstoffelement 21 bzw. parallel zum Ventilteller 24, macht mit diesen denselben Hub bzw. Verstellweg mit, und dient als Referenz für den jeweiligen Hub. Ein dem Magnet 16 gegenüber angeordneter Hallsensor 17 ist weiterer Bestandteil des Positionserfassungsmittels 15. Mit dem Hallsensor 17 wird die Position wie auch die Bewegung bzw. der Hub des Magneten 16 erfasst und hierüber der Hub des Ventiltellers 24 gegenüber des Ventilsitzes 25 erfasst bzw. letztendlich der Querschnitt des Durchflussregelventils 2 bestimmt.

Die in Fig. 3 dargestellte Einstellvorrichtung 1 ist in mehrfacher Ausfertigung in dem in Fig. 4 erläuterten Temperierungssystem 10 verbaut. Die beispielhafte Ausführungsform des Temperierungssystems 10 gemäß Fig. 4 enthält eine Verteilervorrichtung 11 mit drei Einstellvorrichtungen 1, die mittels jeweiligen Flansch 27 auf dem jeweils zugeordneten Durchflussregelventil 2 montiert sind. Die jeweiligen Durchflussregelventile 2 sind in den einen Rücklaufverteiler 14 eingebaut. Auf der gegenüberliegenden Seite der Einstellvorrichtung 1 bzw. auf der in Einbaurichtung betrachteten Unterseite des Rücklaufverteilers 14 weist dieser jeweils ein Anschlussstück 18 auf, über welches die Verbindung zur jeweiligen Verbraucherschleife 3 hergestellt ist. Dabei bildet die jeweilige Verbraucherschleife 3 einen jeweiligen Wärmetauscher 30 aus. Am Anschlussstück 18 ist jeweils ein Temperaturerfassungsmittel 7, beispielsweise ein Rücklauftemperatursensor 7b, angebracht, insbesondere angeklipst oder aufgeklebt. Mit dem Rücklauftemperatursensor 7b wird die jeweilige ausgangsseitige Rücklauftemperatur T_{Rücklauf} des durch die jeweilige Verbraucherschleife 3 strömenden Wärmeträgers erfasst. Der Rücklauftemperatursensor 7b könnte auch an einer anderen geeigneten Stelle zur Erfassung der jeweiligen Rücklauftemperatur angebracht sein, beispielsweise unmittelbar nach dem Anschlussstück 18 an der Rohrwandung der linienhaft dargestellten Verbraucherschleife 3.

Das Temperierungssystem 10 weist ferner einen Vorlaufverteiler 13 auf. Der Vorlaufverteiler 13 enthält in der beispielhaften Ausführungsform drei Anschlussstücke 28 für die drei dargestellten Verbraucherschleifen 3. Ein Temperaturerfassungsmittel 7 ist abermals an jedem Anschlussstück 28 angebracht, beispielsweise ein Vorlauftemperatursensor 7a, um die jeweilige eingangsseitige Vorlauftemperatur T_{Vorlauf} des durch die jeweilige Verbraucherschleife 3 strömenden Wärmeträgers zu erfassen. Der Vorlauftemperatursensor 7a könnte auch an einer anderen geeigneten Stelle zur Erfassung der jeweiligen Vorlauftemperatur angebracht sein, beispielsweise unmittelbar nach dem Anschlussstück 28 an der Rohrwandung der linienhaft dargestellten Verbraucherschleife 3.

Der Vorlaufverteiler 13 ist mit dem Rücklaufverteiler 14 über eine Leitung 29 verbunden, die eine Temperierungsquelle 4 und eine Pumpe 5 enthält. Mit der Pumpe 5 kann der flüssige Wärmeträger, der von der Temperierungsquelle 4 mit Wärmeenergie aufgeladen oder ggf. gekühlt wurde, umgewälzt werden. Der durchfließende Wärmeträger wird von der Pumpe 5 zum Vorlaufverteiler 13 transportiert, dort strömt der Wärmeträger in die hier dargestellten drei Verbraucherschleifen 3 und durch diese hindurch zum Rücklaufverteiler 14 zurück, wobei die jeweilige Durchflussmenge durch den Durchflussquerschnitt des jeweiligen Durchflussregelventils 2, die im Rücklaufverteiler 14 verbaut sind, bestimmt wird. Vom Rücklaufverteiler 14 strömt das dort zusammengefasste durchfließende Wärmeträgermedium wieder zurück zur Pumpe 5 bzw. zur Temperierungsquelle 4.

Ein der jeweiligen Verbraucherschleife 3 zugeordnetes Thermostat 12 gibt ein Ansteuerungssignal aus, wenn ein Temperierungsbedarf besteht. Das Ansteuerungssignal wird vom Thermostat 12 beispielsweise über eine Schnittstelle 9, hier ein Kabel, zur Einstellvorrichtung 1 übertragen. Die Schnittstelle 9 könnte aber auch als eine drahtlose Verbindung ausgebildet sein. Die jeweilige Einstellvorrichtung 1 bestimmt mittels der jeweiligen Berechnungsmittel 8 in Abhängigkeit vom Aktivierungssignal oder Deaktivierungssignal des jeweiligen Thermostaten 12 und den jeweils zugeordneten Signalen bzw. Daten der Vorlauf- und der Rücklauftemperatur den jeweiligen Öffnungsquerschnitt des jeweiligen Durchflussregelventils 2.

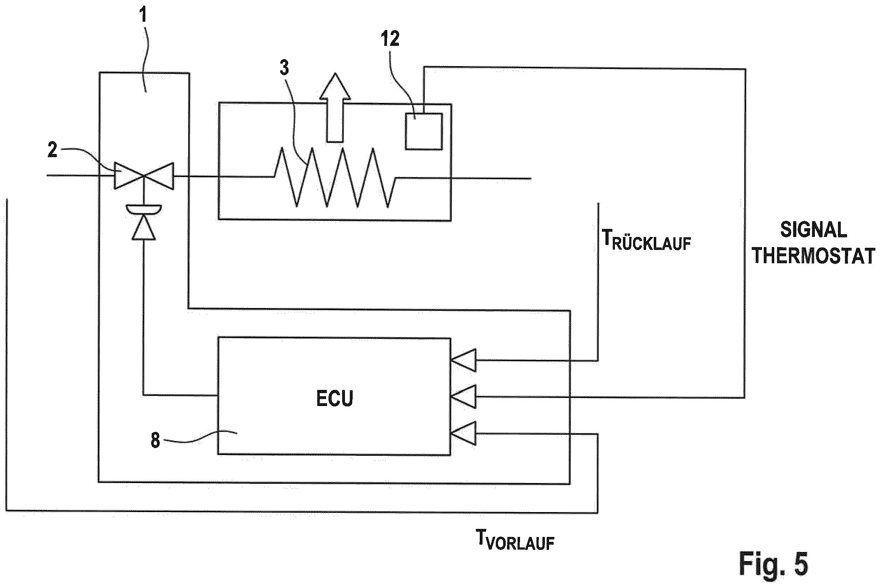

Die im Temperierungssystem 10 gemäß Fig. 4 verbauten Einstellvorrichtungen 1 gemäß Fig. 3 sind in Fig. 5 noch einmal in einem Blockschaltbild, das die Systemkomponenten zur Selbstregulierung darstellt, veranschaulicht.

Wärme oder Kälte werden von der Verbraucherschleife 3 an die Umgebung abgegeben. Ein Thermostat 12, insbesondere ein Raumthermostat in einem Wohnraum eines Gebäudes, gibt ein Signal aus. Das Signal vom Thermostat 12 wird einer ECU der Einstellvorrichtung 1 übergeben. Die ECU erhält ferner Temperatursignale bzw. Daten, wie beispielsweise die Rücklauftemperatur T_{Rücklauf} und die Vorlauftemperatur T_{Vorlauf}. Ein Berechnungsmittel 8, das die ECU enthält, ist dazu eingerichtet, eine elektrische Ansteuerung des hier nicht näher dargestellten Stellgliedes 6 der Einstellvorrichtung 1 vorzunehmen, um einen Hub des Ventils zu realisieren, bzw. die einer einem bestimmten Durchflussquerschnitt zugeordnete, vorbestimmte Öffnungsposition des Durchflussregelventils 2 einzustellen.

Der Öffnungsquerschnitt des Durchflussregelventils 2 bzw. dessen Hub, wird basierend auf einer Regeldifferenz ΔT_{Regeldifferenz} berechnet, wobei die zu berechnende Regeldifferenz ΔT_{Regeldifferenz} zwischen der Temperaturdifferenz ΔT_{Ist} aus der erfassten eingangsseitigen Vorlauftemperatur T_{Vorlauf} und der ausgangsseitigen Rücklauftemperatur T_{Rücklauf} und einer vorbestimmten Temperaturspreizung ΔT_{Soll} von der ausgangsseitigen Rücklauftemperatur T_{Rücklauf} zu der eingangsseitigen Vorlauftemperatur T_{Vorlauf} gebildet wird.

Die Einstellvorrichtung 1 umfasst ferner ein hier nicht weiter dargestelltes Zeiterfassungsmittel und ein Speichermittel, die dazu eingerichtet sind, eine vorangegangene oder aktuelle Aktivierungsdauer des Aktivierungssignals vom Thermostat 12 und/oder eine Deaktivierungsdauer zwischen zwei Aktivierungen oder Deaktivierungen zu erfassen und zu speichern, wobei das Berechnungsmittel 8 mit der darin enthaltenen ECU dazu eingerichtet ist, die Temperaturspreizung ΔT_{Soll} basierend auf einer Aktivierungsdauer und/oder einer Deaktivierungsdauer variabel zu bestimmen.

### Alternative Aspekte zur Ausführung der geeigneten Technik

Nachfolgend werden weitere Aspekte und Alternativen der Einstellvorrichtung 1 des Verfahrens oder eines entsprechenden Temperierungssystems 10 und Baugruppen desselben genannt.

Das Thermostat 12 des Temperierungssystems 10, das in einem Raum angeordnet ist, kann ein Eingabemittel zur Eingabe eines Wertes, der für eine vorgebbare Raumtemperatur bezeichnend ist, und eine Schnittstelle 9 zum Ausgeben eines Aktivierungssignals für wenigstens eine Verbraucherschleife 3 in dem Raum aufweisen.

Das Thermostat 12 des Temperierungssystems 10 kann dazu eingerichtet sein, auf eine tatsächliche Raumtemperatur anzusprechen, indem das Thermostat 12 das Aktivierungssignal ausgibt, solange eine Abweichungstoleranz zwischen der vorgebbaren Raumtemperatur und der tatsächlichen Raumtemperatur überschritten wird.

Eine Aktivierung nach Definition der vorliegenden Offenbarung ist ein Einschaltzustand oder eine Inbetriebnahme aus einem Standby-Modus der Einstellvorrichtung 1 oder zumindest des Berechnungsmittels 8 in der Einstellvorrichtung 1, der bzw. die durch einen kontinuierlichen Signalpegel gestützt, durch einen Signalimpuls getriggert, oder eine in Form eines Signals angelegte Steuerspannung bzw. Ansteuerspannung zur Schaltung eines Transistors an einer Leistungsversorgung, eine in Form eines Signals direkt zugeführte Leistungsversorgung oder dergleichen ausgelöst wird. Eine Aktivierungsdauer bezieht sich definitionsgemäß auf die Zeitdauer vom Anfang bis zum Ende des dementsprechend ausgelösten Einschaltzustands oder der Inbetriebnahme aus einem Standby-Modus bzw. der Empfangsdauer eines kontinuierlichen Signalpegels, Steuerspannung, Ansteuerspannung oder Leistungszufuhr, oder der Zeitdauer zwischen zwei Signalimpulsen, die einen Einschaltvorgang und einen Abschaltvorgang bewirken. Eine Deaktivierung und eine Deaktivierungsdauer sind demgemäß der komplementäre Zustand und Zeitdauer, in dem bzw. in der kein Betrieb der Einstellvorrichtung 1 vorliegt oder zumindest keine Berechnung des Berechnungsmittels 8 oder Ansteuerung des Stellglieds 6 erfolgt.

Die Einstellvorrichtung 1 kann dazu eingerichtet sein, während einer Aktivierungsdauer die durch das Berechnungsmittel 8 berechnete elektrische Ansteuerung an das Stellglied 6 auszugeben, und während einer Deaktivierungsdauer keine elektrische Ansteuerung oder eine vorbestimmte elektrische Ansteuerung, die der geschlossenen Position des Durchflussregelventils 2 entspricht, an das Stellglied 6 auszugeben. Dadurch erfolgt je nach Typ des Stellglieds 6 eine Absperrung der Verbraucherschleife 3 nach einem Heizvorgang, sodass eine übermäßige Energiezufuhr bzw. eine Überschwingen der Temperaturregelung verhindert wird.

Die Einstellvorrichtung 1 kann dazu eingerichtet sein, während einer Deaktivierungsdauer eine elektrische Leistungszufuhr zu dem Berechnungsmittel 8 und/oder zu der Einstellvorrichtung 1 auszuschalten. Dadurch wird in den Deaktivierungsdauern, die sich z.B. auch über einen Sommer erstrecken können, Strom eingespart.

Das Berechnungsmittel 8 kann dazu eingerichtet sein, zumindest einen Wert einer vorangegangenen Öffnungsposition des Durchflussregelventils 2 in dem Speichermittel zu speichern. Dadurch kann bei Aktivierung der Einstellvorrichtung 1 zunächst eine Ventilstellung als Ausgangspunkt angefahren werden, die bereits im Laufe der vorherigen Heizdauern ermittelt wurde und in der laufenden Heizdauer lediglich abweichend angepasst werden braucht.

Das Speichermittel kann einen vorab gespeicherten Referenzwert für die Aktivierungsdauer und/oder einen vorab gespeicherten Referenzwert für die Deaktivierungsdauer enthalten. Dadurch wird eine als komfortabel festgelegte Zeitdauer zur Erreichung einer vorgegebenen Temperatur als angestrebter Referenzwert hinterlegt, nach dem sich die Selbstregulierung richtet.

Das Speichermittel kann einen vorab gespeicherten Wertebereich für die Temperaturspreizung enthalten. Dadurch kann auf einfache Weise sichergestellt werden, dass der Betriebspunkt des Wärmetauschers 30 innerhalb eines energieeffizienten Bereichs gewählt wird.

Das Speichermittel kann ein vorab gespeichertes Kennfeld mit zugeordneten Werten von Aktivierungsdauern und/oder Deaktivierungsdauern und vorgegebenen Temperaturspreizungen zur Bestimmung der Temperaturspreizung enthalten. Dadurch kann eine vorbestimmte universelle Regelung mit geringerer Verarbeitungsleistung umgesetzt werden.

Das Speichermittel kann eine vorab gespeicherte Steuerungslogik zur Berechnung der Temperaturspreizung enthalten. Dadurch kann eine individuellere Regelung umgesetzt werden.

Die Einstellvorrichtung 1 kann dazu eingerichtet sein, die Temperaturspreizung in Abhängigkeit der Vorlauftemperatur zu verändern, und/oder die Einstellvorrichtung 1 kann dazu eingerichtet sein, eine Bandbreite der Temperaturspreizung in Abhängigkeit der Vorlauftemperatur zu verändern, und/oder die Einstellvorrichtung 1 kann dazu eingerichtet sein, über die Schnittstelle 9 weitere externe Signale mit Betriebsparametern aus dem Temperierungssystem 10 zu empfangen und das Berechnungsmittel 8 kann dazu eingerichtet sein, die Temperaturspreizung in Abhängigkeit der Betriebsparameter anzupassen. Dadurch kann eine Regelung umgesetzt werden, die anhand einer Änderung der Vorlauftemperatur Witterungsschwankungen oder Jahresszeiten erfasst und einen effizienten Arbeitspunkt entsprechend anpasst oder weitere komfortorientierte Funktionen, die an einem multifunktionalen Raumthermostat vorgegeben werden können, in die Regelung mit einfließen lässt.

In einem Raum des Gebäudes können ein Thermostat 12 und zwei oder mehr Verbraucherschleifen 3 bzw. Heiz- oder Kühlkreise angeordnet sein. Dadurch ist es möglich große Räume durch mehrere installierte Heiz- oder Kühlschlangen mit standardisierten Durchmessern und einem in Summe geringeren Strömungswiderstand zu versorgen, die durch eigene Einstellvorrichtungen 1, jedoch denselben Raumthermostat, geregelt werden.

Das Thermostat 12 kann ein Bimetall-Element aufweisen, das auf die tatsächliche Raumtemperatur anspricht und eine Ausgabe des Aktivierungssignals oder des Deaktivierungssignals betätigt. Dadurch wird eine besonders einfache, zuverlässige und kostengünstige Ausführung des Raumthermostats ohne Elektronik und Sensorik realisiert.

Das Aktivierungssignal oder Deaktivierungssignal kann ein binäres Signal sein, das einen Einschaltzustand mit einem Signalpegel oberhalb eines vorbestimmen Pegelwertes und einen Ausschaltzustand ohne Signalpegel oder einem Signalpegel unterhalb des vorbestimmen Pegelwertes umfasst. Dadurch wird ebenfalls eine besonders einfache und kostengünstige Ausführung der Signalerzeugung und der Signalerkennung realisiert.

Ein Thermostat 12 kann einen Mikrocomputer und einen Temperatursensor 7a, 7b zur Erfassung der tatsächlichen Raumtemperatur umfassen; wobei das Thermostat 12 einen Verlauf der tatsächlichen Raumtemperatur erfasst und speichert, während und/oder nachdem das Aktivierungssignal oder das Deaktivierungssignal ausgegeben wird; und das Thermostat 12 und eine Einstellvorrichtung 1 dazu eingerichtet sein, Daten zu einem Verlauf erfasster tatsächlicher Raumtemperaturen zu kommunizieren. Dadurch wird eine multifunktionale Ausführung des Temperierungssystems 10 realisiert, die eine adaptive Regelung an weitere komfortorientierte Parameter, wie eine Beeinflussung eines Heizkurvenverlaufs in Abhängigkeit einer Ausgangs- und Zieltemperatur und/oder einer Außentemperatur oder einer Uhrzeit oder dergleichen ermöglicht.

Das Aktivierungssignal und/oder das Deaktivierungssignal kann mittels drahtlosen Schnittstellen 9 von einem bestimmten Thermostat 12 zu einer zugeordneten Einstellvorrichtung 1 kommuniziert werden. Dadurch kann eine Verkabelung von dem Raumthermostat zu der Einstellvorrichtung 1 entfallen und ein Installationsaufwand verringert werden. Ferner kann über eine solche drahtlose Schnittstelle 9 ebenso eine Verbindung zwischen einem Smartphone, Tablet PC oder dergleichen und einer Einstellvorrichtung 1 oder einem Thermostat 12 aufgenommen werden, wodurch eine weitere Eingabemöglichkeit für den Nutzer zum System ermöglicht wird.

Es kann eine kleinere Temperaturspreizung bestimmt werden, wenn zumindest eine vorangegangene Aktivierungsdauer größer als ein Referenzwert ist, oder eine größere Temperaturspreizung bestimmt werden, wenn zumindest eine vorangegangene Aktivierungsdauer kleiner als der Referenzwert ist. Dadurch orientiert sich die Selbstregulierung an einer vorab als komfortabel festgelegten Zeitdauer zur Erreichung einer vorgegebenen.

Die Temperaturspreizung kann basierend auf einem Verlauf aufeinander folgender, vorangegangener Aktivierungsdauern bestimmt werden. Dadurch wird eine bessere Anpassung der Selbstregulierung an Nutzerverhalten, Jahreszeiten und dergleichen ermöglicht.

Die Einstellvorrichtung 1 kann ein Positionserfassungsmittel 15 aufweisen, das derart ausgebildet ist, eine aktuelle Position des Stellglieds 6 zu erfassen. Dadurch wird eine je nach Typ des Stellglieds 6 erforderliche Einhaltung eines vorgegebenen Stellwegs ermöglicht.

Das Positionserfassungsmittel 15 kann aus einem Magneten 16 und einem dem Magneten 16 zugeordneten Hallsensor 17 gebildet sein. Dadurch wird eine exakte Erfassung und Ausführung eines vorgegebenen Stellwegs ermöglicht.

Das Stellglied 6 kann durch verschiedene Arten von Aktoren bereitgestellt sein, deren Stellkraft auf einer elektromotorischen Leistung, einer Wärmeausdehnung, einer Federvorspannung oder dergleichen basiert, solange der Stellweg durch eine Ansteuerung seitens des Berechnungsmittels 8 ansteuerbar ist.

In den vorstehend diskutierten Figuren 3 bis 5 wurden die nachfolgend zusammenfassend aufgelisteten Bezugszeichen verwendet, wobei diese Auflistung keinen Anspruch auf Vollständigkeit erhebt:
- 1: Einstellvorrichtung;
- 2: Durchflussregelventil;
- 3: Verbraucherschleife;
- 4: Temperierungsquelle;
- 5: Pumpe;
- 6: Stellglied;
- 7: Temperaturerfassungsmittel;
- 7a: Vorlauftemperatursensor;
- 7b: Rücklauftemperatursensor;
- 8: Berechnungsmittel;
- 9: Schnittstelle;
- 10: Temperierungssystem;
- 11: Verteilervorrichtung;
- 12: Thermostat,
- 13: Vorlaufverteiler;
- 14: Rücklaufverteiler;
- 15: Positionserfassungsmittel;
- 16: Magnet;
- 17: Hallsensor;
- 18: Anschlussstück;
- 20: Betätigungsmittel;
- 21: Dehnstoffelement;
- 22: Spiralfeder;
- 23: Ventilstift;
- 24: Ventilteller;
- 25: Ventilsitz;
- 26: Ausleger;
- 27: Flansch;
- 28: Anschlussstück;
- 29: Leitung;
- 30: Wärmetauscher;

- S_{V min}: geschlossene Position des Durchflussregelventils
- S_{V-Dichtung}: dichtungswirksame Öffnungsposition des Durchflussregelventils
- S_{V-hydraulisch}: hydraulisch begrenzte Öffnungsposition des Durchflussregelventils

- T_{Vorlauf}: eingangsseitige Vorlauftemperatur des durchfließenden Wärmeträgers;
- T_{Rücklauf}: ausgangsseitige Rücklauftemperatur des durchfließenden Wärmeträgers;
- ΔT_{Ist}: Temperaturdifferenz;
- ΔT_{Soll}: Temperaturspreizung;
- ΔT_{Soll-min}: minimale Temperaturspreizung;
- ΔT_{Soll-max}: maximale Temperaturspreizung;
- ΔT_{Regeldifferenz}: Regeldifferenz;
- T_{Raum-Soll}: vorgebbare Raumtemperatur;
- T_{Raum-Ist}: tatsächliche Raumtemperatur;

## Patentansprüche

1. Einstellvorrichtung (1) zur selbstregulierenden Einstellung eines Durchflussregelventils (2) einer Verbraucherschleife (3) mit Wärmetauscher (30), insbesondere in einem Temperierungssystem (10) für Gebäude mit einer Temperierungsquelle (4), einem flüssigen Wärmeträger und einer Pumpe (5), wobei die Einstellvorrichtung (1) aufweist:
ein Stellglied (6), das mit dem Durchflussregelventil (2) derart koppelbar eingerichtet ist, dass eine Öffnungsposition des Durchflussregelventils (2) zwischen einer geschlossenen Position (S_{V min}) und einer geöffneten Position, graduell oder schrittweise, durch die Einstellvorrichtung (1) einstellbar und erfassbar ist;
Temperaturerfassungsmittel (7), die eine bezüglich der Verbraucherschleife (3) eingangsseitige Vorlauftemperatur (T_{Vorlauf}) und eine ausgangsseitige Rücklauftemperatur (T_{Rücklauf}) des durchfließenden Wärmeträgers erfassen;
ein Berechnungsmittel (8), das dazu eingerichtet ist, eine Ansteuerung des Stellglieds (6), die einer - einem bestimmten Durchflussquerschnitt zugeordneten - vorbestimmten Öffnungsposition des Durchflussregelventils (2) entspricht, basierend auf einer Regeldifferenz (ΔT_{Regeldifferenz}) zu berechnen, wobei die zu berechnende Regeldifferenz (ΔT_{Regeldifferenz}) zwischen
einer Temperaturdifferenz (ΔT_{Ist}) aus der erfassten eingangsseitigen Vorlauftemperatur (T_{Vorlauf}) und der ausgangsseitigen Rücklauftemperatur (T_{Rücklauf}), und einer vorbestimmten Temperaturspreizung (ΔT_{Soll}) von der ausgangsseitigen Rücklauftemperatur (T_{Rücklauf}) zu der eingangsseitigen Vorlauftemperatur (T_{Vorlauf}) gebildet wird;
**dadurch gekennzeichnet, dass**
die Einstellvorrichtung (1) dazu eingerichtet ist, eine Öffnungsposition des Durchflussregelventils (2), die basierend auf der Regeldifferenz (ΔT_{Regeldifferenz}) eingestellt ist, auf eine Öffnungsposition mit einem größeren Durchflussquerschnitt entlang eines Stellwegs zu erhöhen; und
von der erhöhten Öffnungsposition ausgehend, erneut eine Öffnungsposition des Durchflussregelventils (2) basierend auf der Regeldifferenz (ΔT_{Regeldifferenz}) einzustellen, wenn:
I) die Öffnungsposition des Durchflussregelventils (2) eine auf dem Stellweg vorbestimmte, dichtungswirksame Öffnungsposition (S_{V-Dichtung}), bei der kein Durchfluss durch das Durchflussregelventil (2) zu erwarten ist, unterschreitet; oder
II) die Öffnungsposition des Durchflussregelventils (2) eine auf dem Stellweg vorbestimmte, hydraulisch begrenzte Öffnungsposition (S_{V-hydraulisch}), bei der ein Durchfluss durch das Durchflussregelventil (2) zu erwarten ist, unterschreitet, und zugleich
i) die erfasste Temperaturdifferenz (ΔT_{Ist}) die vorbestimmte Temperaturspreizung (ΔT_{Soll}) unterschreitet; oder
ii) ein Wiederholungsintervall zur erneuten Erhöhung der Öffnungsposition abgelaufen ist.

2. Einstellvorrichtung (1) nach Anspruch 1, wobei
das Stellglied (6), das mit dem Durchflussregelventil (2) derart koppelbar eingerichtet ist, dass eine Öffnungsposition des Durchflussregelventils (2) zwischen der geschlossenen Position (S_{V min}) und der geöffneten Position, graduell oder schrittweise, durch die Einstellvorrichtung (1) einstellbar und erfassbar ist, elektrisch ansteuerbar ist; ferner aufweisend:
eine Schnittstelle (9) zum Empfangen eines externen Aktivierungssignals zur Aktivierung des Berechnungsmittels (8) und/oder der Einstellvorrichtung (1); wobei
die Einstellvorrichtung (1) ein Zeiterfassungsmittel und ein Speichermittel umfasst, die dazu eingerichtet sind, eine vorangegangene oder aktuelle Aktivierungsdauer des Aktivierungssignals und/oder eine Deaktivierungsdauer zwischen zwei Aktivierungen zu erfassen und zu speichern; und
das Berechnungsmittel (8) dazu eingerichtet ist, die Temperaturspreizung (ΔT_{Soll}) basierend auf einer Aktivierungsdauer und/oder einer Deaktivierungsdauer variabel zu bestimmen.

3. Einstellvorrichtung (1) nach Anspruch 1 oder 2, wobei
die dichtungswirksame Öffnungsposition (S_{V-Dichtung}) des Durchflussregelventils (2) in einem Bereich von 1 % bis 6 % des Stellwegs des Durchflussregelventils (2) ausgehend von der vollständig geschlossenen Position (S_{V-min}) festgelegt ist.

4. Einstellvorrichtung (1) nach einem der Ansprüche 1 bis 3, wobei
die hydraulisch begrenzte Öffnungsposition (S_{V-hydraulisch}) des Durchflussregelventils (2) in einem Bereich von 6 % bis 20 % des Stellwegs des Durchflussregelventils (2) ausgehend von der vollständig geschlossenen Position (Sv-min) festgelegt ist.

5. Einstellvorrichtung (1) nach einem der Ansprüche 1 bis 4, wobei
die Unterschreitung der Temperaturspreizung (ΔT_{Soll}) durch die erfasste Temperaturdifferenz (ΔT_{Ist}) auf eine Differenz vorbestimmt ist, und die Differenz in einem Bereich von 10 % bis 90 % eines Betrags der Temperaturspreizung (ΔT_{Soll}) festgelegt ist.

6. Einstellvorrichtung (1) nach einem der Ansprüche 2 bis 5, wobei
die Einstellvorrichtung (1) als Ergebnis der variablen Bestimmung der Temperaturspreizung (ΔT_{Soll}) einen Wertebereich zwischen einer minimalen Temperaturspreizung (ΔT_{Soll-min}) und einer maximalen Temperaturspreizung (ΔT_{Soll-max}) bestimmt, und sich die Unterschreitung auf die minimale Temperaturspreizung (ΔT_{Soll-min}) bezieht.

7. Einstellvorrichtung (1) nach einem der Ansprüche 1 bis 6, wobei
das Wiederholungsintervall vorbestimmt ist, auf eine Laufzeit in einem Bereich von 1 h bis 10 h festgelegt ist, und das Wiederholungsintervall bei einer Aktivierung der Einstellvorrichtung (1) beginnt.

8. Einstellvorrichtung (1) nach einem der Ansprüche 1 bis 7, wobei
die erhöhte Öffnungsposition, auf welche die Einstellvorrichtung (1) die Öffnungsposition des Durchflussregelventils (2) entlang des Stellwegs erhöht, die hydraulisch begrenzte Öffnungsposition (S_{V-hydraulisch}) ist.

9. Einstellvorrichtung (1) nach einem der Ansprüche 1 bis 8, wobei
eine Sperrdauer bereitgestellt ist; und
die Einstellvorrichtung (1) dazu eingerichtet ist, während der Sperrdauer die Öffnungsposition des Durchflussregelventils (2), die basierend auf der Regeldifferenz (ΔT_{Regeldifferenz}) eingestellt ist, nicht zu erhöhen,
II) wenn die Öffnungsposition des Durchflussregelventils (2) die auf dem Stellweg vorbestimmte, hydraulisch begrenzte Öffnungsposition (S_{V-hydraulisch}), bei der ein Durchfluss durch das Durchflussregelventil (2) zu erwarten ist, unterschreitet, und zugleich
i) die erfasste Temperaturdifferenz (ΔT_{Ist}) die vorbestimmte oder die variabel bestimmte Temperaturspreizung (ΔT_{Soll}) unterschreitet.

10. Einstellvorrichtung (1) nach Anspruch 9, wobei
die Sperrdauer vorbestimmt ist, auf eine Laufzeit in einem Bereich von 5 min bis 60 min festgelegt ist, und die Sperrdauer bei einer Aktivierung der Einstellvorrichtung (1) beginnt.

11. Verfahren zur selbstregulierenden Einstellung eines Durchflusses eines flüssigen Wärmeträgers durch eine Verbraucherschleife (3) mit Wärmetauscher (30) in einem Temperierungssystem (10) für Gebäude mit einer Temperierungsquelle (4) und einer Pumpe (5) mittels einer Einstellvorrichtung (1) gemäß einem der Ansprüche 1 bis 10;
wobei das Verfahren zumindest die folgenden Schritte aufweist:
Erfassen einer eingangsseitigen Vorlauftemperatur (T_{Vorlauf}) und einer ausgangsseitigen Rücklauftemperatur (T_{Rücklauf}) des durchfließenden Wärmeträgers an der Verbraucherschleife (3);
Berechnen einer Regeldifferenz (ΔT_{Regeldifferenz}) zwischen einer Temperaturdifferenz (ΔT_{Ist}) aus der erfassten eingangsseitigen Vorlauftemperatur (T_{Vorlauf}) und der ausgangsseitigen Rücklauftemperatur (T_{Rücklauf}), sowie einer vorbestimmten Temperaturspreizung (ΔT_{Soll}); und
Einstellen einer - einem bestimmten Durchflussquerschnitt zugeordneten - Öffnungsposition des Durchflussregelventils (2) in der Verbraucherschleife (3) entsprechend einem basierend auf der Regeldifferenz (ΔT_{Regeldifferenz}) berechneten Durchflussquerschnitt;
**gekennzeichnet durch die Schritte:**
Erhöhen der Öffnungsposition des Durchflussregelventils (2), die basierend auf der Regeldifferenz (ΔT_{Regeldifferenz}) eingestellt ist, entlang eines Stellwegs auf eine Öffnungsposition mit einem größeren Durchflussquerschnitt; und
erneutes Einstellen der Öffnungsposition des Durchflussregelventils (2) basierend auf der Regeldifferenz (ΔT_{Regeldifferenz}), ausgehend von der erhöhten Öffnungsposition, wenn:
I) die Öffnungsposition des Durchflussregelventils (2) eine auf dem Stellweg vorbestimmte, dichtungswirksame Öffnungsposition (S_{V-Dichtung}), bei der kein Durchfluss durch das Durchflussregelventil (2) zu erwarten ist, unterschreitet; oder
II) die Öffnungsposition des Durchflussregelventils (2) eine auf dem Stellweg vorbestimmte, hydraulisch begrenzte Öffnungsposition (S_{V-hydraulisch}), bei der ein Durchfluss durch das Durchflussregelventil (2) zu erwarten ist, unterschreitet, und zugleich
i) die erfasste Temperaturdifferenz (ΔT_{Ist}) die vorbestimmte Temperaturspreizung (ΔT_{Soll}) unterschreitet; oder
ii) ein Wiederholungsintervall zur erneuten Erhöhung der Öffnungsposition abgelaufen ist.

12. Verfahren nach Anspruch 11, wobei
die Verbraucherschleife (3) extern aktivierbar ist;
und das Verfahren ferner zumindest die folgenden Schritte aufweist:
Erfassen einer vorangegangenen oder aktuellen Aktivierungsdauer und/oder einer Deaktivierungsdauer der Verbraucherschleife (3); und
Bestimmen einer variablen Temperaturspreizung (ΔT_{Soll}) von der ausgangsseitigen Rücklauftemperatur (T_{Rücklauf}) zu der eingangsseitigen Vorlauftemperatur (T_{Vorlauf}) basierend auf der Aktivierungsdauer und/oder der Deaktivierungsdauer.

13. Verfahren nach Anspruch 11 oder 12, wobei
die dichtungswirksame Öffnungsposition (S_{V-Dichtung}) des Durchflussregelventils (2) in einem Bereich von 1 % bis 6 % des Stellwegs des Durchflussregelventils (2) ausgehend von der vollständig geschlossenen Position (S_{V-min}) festgelegt ist.

14. Verfahren nach einem der Ansprüche 11 bis 13, wobei
die hydraulisch begrenzte Öffnungsposition (S_{V-hydraulisch}) des Durchflussregelventils (2) in einem Bereich von 6 % bis 20 % des Stellwegs des Durchflussregelventils (2) ausgehend von der vollständig geschlossenen Position (Sv-min) festgelegt ist.

15. Verfahren nach einem der Ansprüche 11 bis 14, wobei
die Unterschreitung der Temperaturspreizung (ΔT_{Soll}) durch die erfasste Temperaturdifferenz (ΔT_{Ist}) auf eine Differenz vorbestimmt ist, und die Differenz in einem Bereich von 10 % bis 90 % eines Betrags der Temperaturspreizung (ΔT_{Soll}) festgelegt ist.

16. Verfahren nach einem der Ansprüche 12 bis 15, wobei
als Ergebnis der variablen Bestimmung der Temperaturspreizung (ΔT_{Soll}) ein Wertebereich zwischen einer minimalen Temperaturspreizung (ΔT_{Soll-min}) und einer maximalen Temperaturspreizung (ΔT_{Soll-max}) bestimmt wird, und sich die Unterschreitung auf die minimale Temperaturspreizung (ΔT_{Soll-min}) bezieht.

17. Verfahren nach einem der Ansprüche 11 bis 16, wobei
das Wiederholungsintervall vorbestimmt ist, auf eine Laufzeit in einem Bereich von 1 h bis 10 h festgelegt ist, und das Wiederholungsintervall bei einer Aktivierung der Einstellvorrichtung (1) beginnt.

18. Verfahren nach einem der Ansprüche 11 bis 17, wobei
die erhöhte Öffnungsposition, auf welche die Einstellvorrichtung (1) die Öffnungsposition des Durchflussregelventils (2) entlang des Stellwegs erhöht, die hydraulisch begrenzte Öffnungsposition (S_{V-hydraulisch}) ist.

19. Verfahren nach einem der Ansprüche 11 bis 18, wobei
eine Sperrdauer bereitgestellt ist; und
während der Sperrdauer die Öffnungsposition des Durchflussregelventils (2), die basierend auf der Regeldifferenz (ΔT_{Regeldifferenz}) eingestellt ist, nicht erhöht wird,
II) wenn die Öffnungsposition des Durchflussregelventils (2) die auf dem Stellweg vorbestimmte, hydraulisch begrenzte Öffnungsposition (S_{V-hydraulisch}), bei der ein Durchfluss durch das Durchflussregelventil (2) zu erwarten ist, unterschreitet, und zugleich
i) die erfasste Temperaturdifferenz (ΔT_{Ist}) die vorbestimmte oder die variabel bestimmte Temperaturspreizung (ΔT_{Soll}) unterschreitet.

20. Verfahren nach Anspruch 19, wobei
die Sperrdauer vorbestimmt ist, auf eine Laufzeit in einem Bereich von 5 min bis 60 min festgelegt ist, und die Sperrdauer bei einer Aktivierung der Einstellvorrichtung (1) beginnt.

## Claims

1. Adjustment apparatus (1) for self-regulating adjustment of a flow control valve (2) of a consumer loop (3) comprising a heat exchanger (30), especially in a temperature regulating system (10) for buildings with a temperature regulating source (4), a liquid heating medium and a pump (5), wherein the adjustment apparatus (1) comprises:
an actuator (6) which is configured so as to be able to be coupled to the flow control valve (2) such that an opening position of the flow control valve (2) can be adjusted and detected between a closed position (S_{V min}) and an open position, in particular gradually or in steps, by means of the adjustment apparatus (1);
temperature detection means (7) which detect a supply temperature (T_{supply}), which is on the input side in relation to the consumer loop (3), and an output-side return temperature (Tᵣₑₜᵤᵣₙ) of the through-flowing heating medium;
a calculation means (8) which is configured to calculate an activation of the actuator (6) which corresponds to a predetermined opening position - allocated to a specific flow cross-section - of the flow control valve (2) based upon a control difference (ΔT_{control difference}), wherein the control difference (ΔT_{control difference}), which is to be calculated, between
a temperature difference (ΔT_{actual}) is formed from the detected input-side supply temperature (T_{supply}) and the output-side return temperature (Tᵣₑₜᵤᵣₙ) and a predetermined temperature spread (ΔT_{desired}) from the output-side return temperature (Tᵣₑₜᵤᵣₙ) to the input-side supply temperature (T_{supply});
**characterised in that**
the adjustment apparatus (1) is configured to increase an opening position of the flow control valve (2), which is adjusted based upon the control difference (ΔT_{control difference}), to an opening position with a larger flow cross-section along an actuating travel path; and
starting from the increased opening position, to readjust an opening position of the flow control valve (2) based upon the control difference (ΔT_{control difference});
I) if the opening position of the flow control valve (2) is less than a seal-effective opening position (S_{V-seal}) which is predetermined on the actuating travel path and at which no flow through the flow control valve (2) is to be expected; or
II) if the opening position of the flow control valve (2) is less than a hydraulically limited opening position (S_{V-hydraulic}) which is predetermined on the actuating travel path and at which a flow through the flow control valve (2) is to be expected, and at the same time
i) the detected temperature difference (ΔT_{actual}) is less than the predetermined temperature spread (ΔT_{desired}); or
ii) a repetition interval for increasing the opening position again has expired.

2. Adjustment apparatus (1) as claimed in claim 1, wherein
the actuator (6) which is configured so as to be able to be coupled to the flow control valve (2) such that an opening position of the flow control valve (2) can be adjusted and detected between the closed position (SVₘᵢₙ) and the open position by means of the adjustment apparatus (1) gradually or in steps, is electrically activatable; further comprising:
an interface (9) for receiving an external activation signal for activating the calculation means (8) and/or the adjustment apparatus (1); wherein
the adjustment apparatus (1) comprises a time detection means and a storage means which are configured to detect and store a preceding or current activation period of the activation signal and/or a deactivation period between two activations; and
the calculation means (8) is configured to variably determine the temperature spread (ΔT_{desired}) based upon an activation period and/or a deactivation period.

3. Adjustment apparatus (1) as claimed in claim 1 or 2, wherein
the seal-effective opening position (S_{V-seal}) of the flow control valve (2) is fixed in a range of 1% to 6% of the actuating travel of the flow control valve (2) starting from the completely closed position (S_{V-min}).

4. Adjustment apparatus (1) as claimed in claims 1-3, wherein
the hydraulically limited opening position (S_{V-hydraulic}) of the flow control valve (2) is fixed in a range of 6% to 20% of the actuating travel of the flow control valve (2) starting from the completely closed position (S_{V-min}).

5. Adjustment apparatus (1) as claimed in claims 1-4, wherein
the fact that the detected temperature difference (ΔT_{actual}) is less than the temperature spread (ΔT_{desired}) is predetermined to a difference and the difference is fixed in a range of 10% to 90% of a value of the temperature spread (ΔT_{desired}).

6. Adjustment apparatus (1) as claimed in claims 2-5, wherein
the adjustment apparatus (1) determines a value range between a minimum temperature spread (ΔT_{desired-min}) and a maximum temperature spread (ΔT_{desired-max}) as a result of the variable determination of the temperature spread (ΔT_{desired}), and a value less than this relates to the minimum temperature spread (ΔT_{desired-min}).

7. Adjustment apparatus (1) as claimed in claims 1-6, wherein
the repetition interval is predetermined, fixed to a running time in a range of 1 h to 10 h, and the repetition interval starts during an activation of the adjustment apparatus (1).

8. Adjustment apparatus (1) as claimed in claims 1-7, wherein
the increased opening position, to which the adjustment apparatus (1) increases the opening position of the flow control valve (2) along the actuating travel path, is the hydraulically limited opening position (S_{V-hydraulic}).

9. Adjustment apparatus (1) as claimed in claims 1-8, wherein
a blocking period is provided; and
the adjustment apparatus (1) is configured not to increase the opening position of the flow control valve (2), which is adjusted based upon the control difference (ΔT_{control difference}), during the blocking period,
II) if the opening position of the flow control valve (2) is less than the hydraulically limited opening position (S_{V-hydraulic}) which is predetermined on the actuating travel path and at which a flow through the flow control valve (2) is to be expected, and at the same time
i) the detected temperature difference (ΔT_{actual}) is less than the predetermined or the variably determined temperature spread (ΔT_{desired}).

10. Adjustment apparatus (1) as claimed in claim 9, wherein
the blocking period is predetermined, fixed to a running time in a range of 5 min to 60 min, and the blocking period starts during an activation of the adjustment apparatus (1).

11. Method for self-regulating adjustment of a flow of a liquid heating medium through a consumer loop (3) comprising a heat exchanger (30) in a temperature regulating system (10) for buildings having a temperature regulating source (4) and a pump (5) by means of an adjustment apparatus (1) according to any one of claims 1-10;
wherein the method comprises at least the steps of:
detecting an input-side supply temperature (T_{supply}) and an output-side return temperature (Tᵣₑₜᵤᵣₙ) of the through-flowing heating medium at the consumer loop (3);
calculating a control difference (ΔT_{control difference}) between a temperature difference (ΔT_{actual}) from the detected input-side supply temperature (T_{supply}) and the output-side return temperature (Tᵣₑₜᵤᵣₙ), as well as a predetermined temperature spread (ΔT_{desired}); and
adjusting an opening position - allocated to a specific flow cross-section - of the flow control valve (2) in the consumer loop (3) corresponding to a flow cross-section calculated based upon the control difference (ΔT_{control difference});
**characterised by the steps of:**
increasing the opening position of the flow control valve (2), which is adjusted based upon the control difference (ΔT_{control difference}), along an actuating travel path to an opening position with a larger flow cross-section; and
readjusting the opening position of the flow control valve (2) based upon the control difference (ΔT_{control difference}), starting from the increased opening position;
I) if the opening position of the flow control valve (2) is less than a seal-effective opening position (S_{V-seal}) which is predetermined on the actuating travel path and at which no flow through the flow control valve (2) is to be expected; or
II) if the opening position of the flow control valve (2) is less than a hydraulically limited opening position (S_{V-hydraulic}) which is predetermined on the actuating travel path and at which a flow through the flow control valve (2) is to be expected, and at the same time
i) the detected temperature difference (ΔT_{actual}) is less than the predetermined temperature spread (ΔT_{desired}); or
ii) a repetition interval for increasing the opening position again has expired.

12. Method according to claim 11, wherein
the consumer loop (3) is externally activatable; and
the method further comprises at least the steps of:
detecting a preceding or current activation period and/or a deactivation period of the consumer loop (3); and
determining a variable temperature spread (ΔT_{desired}) from the output-side return temperature (Tᵣₑₜᵤᵣₙ) to the input-side supply temperature (T_{supply}) based on the activation period and/or the deactivation period.

13. Method as claimed in claim 11 or 12, wherein
the seal-effective opening position (S_{V-seal}) of the flow control valve (2) is fixed in a range of 1% to 6% of the actuating travel of the flow control valve (2) starting from the completely closed position (S_{V-min}).

14. Method as claimed in claims 11-13, wherein
the hydraulically limited opening position (S_{V-hydraulic}) of the flow control valve (2) is fixed in a range of 6% to 20% of the actuating travel of the flow control valve (2) starting from the completely closed position (S_{V-min}).

15. Method as claimed in claims 11-14, wherein
the fact that the detected temperature difference (ΔT_{actual}) is less than the temperature spread (ΔT_{desired}) is predetermined to a difference and the difference is fixed in a range of 10% to 90% of a value of the temperature spread (ΔT_{desired}).

16. Method as claimed in claims 12-15, wherein
a value range between a minimum temperature spread (ΔT_{desired-min}) and a maximum temperature spread (ΔT_{desired-max}) is determined as a result of the variable determination of the temperature spread (ΔT_{desired}), and a value less than this relates to the minimum temperature spread (ΔT_{desired-min}).

17. Method as claimed in claims 11-16, wherein
the repetition interval is predetermined, fixed to a running time in a range of 1 h to 10 h, and the repetition interval starts during an activation of the adjustment apparatus (1).

18. Method as claimed in claims 11-17, wherein
the increased opening position, to which the adjustment apparatus (1) increases the opening position of the flow control valve (2) along the actuating travel path, is the hydraulically limited opening position (S_{V-hydraulic}).

19. Method as claimed in claims 11-18, wherein
a blocking period is provided; and
the opening position of the flow control valve (2), which is adjusted based upon the control difference (ΔT_{control difference}), is not increased during the blocking period,
II) if the opening position of the flow control valve (2) is less than the hydraulically limited opening position (S_{V-hydraulic}) which is predetermined on the actuating travel path and at which a flow through the flow control valve (2) is to be expected, and at the same time
i) the detected temperature difference (ΔT_{actual}) is less than the predetermined or the variably determined temperature spread (ΔT_{desired}).

20. Method as claimed in claim 19, wherein
the blocking period is predetermined, fixed to a running time in a range of 5 min to 60 min, and the blocking period starts during an activation of the adjustment apparatus (1).

## Revendications

1. Dispositif de réglage (1) pour le réglage autorégulant d'une vanne de régulation de débit (2) d'une boucle de consommation (3) avec échangeur de chaleur (30), en particulier dans un système de régulation de température (10) pour des bâtiments avec une source de régulation de température (4), un agent caloporteur liquide et une pompe (5), le dispositif de réglage (1) présentant :
un organe de réglage (6) qui est agencé de manière à pouvoir être couplé à la vanne de régulation de débit (2) de telle sorte qu'une position d'ouverture de la vanne de régulation de débit (2) entre une position fermée (S_{V min}) et une position ouverte peut être réglée et détectée, graduellement ou par étapes, par le dispositif de réglage (1) ;
un moyen de détection de température (7) qui détecte une température (T_{Vorlauf}) d'arrivée côté entrée et une température (T_{Rücklauf}) de retour côté sortie du fluide caloporteur qui circule par rapport à la boucle de consommation (3) ;
un moyen de calcul (8) adapté pour calculer une commande de l'organe de réglage (6) correspondant à une position d'ouverture prédéterminée de la vanne de régulation de débit (2) - associée à une certaine section transversale de débit - sur la base d'une différence de régulation (ΔT_{Regeldifferenz}), la différence de régulation (ΔT_{Regeldifferenz}) à calculer étant comprise entre
d'une différence de température (ΔT_{Ist}) entre la température (T_{Vorlauf}) d'arrivée côté entrée et la température (T_{Rücklauf}) de retour côté sortie, et d'un écart de température (ΔT_{Soll}) prédéfini entre la température (T_{Rücklauf}) de retour côté sortie et la température (T_{Vorlauf}) d'arrivée côté entrée ;
**caractérisé en ce que**
le dispositif de réglage (1) est adapté pour augmenter une position d'ouverture de la vanne de régulation de débit (2), qui est réglée sur la base de la différence de régulation (ΔT_{Regeldifferenz}), à une position d'ouverture ayant une section transversale de débit plus grande le long d'un trajet de réglage ; et
à partir de la position d'ouverture augmentée, régler à nouveau une position d'ouverture de la vanne de régulation de débit (2) sur la base de la différence de régulation (ΔT_{Regeldifferenz}), lorsque :
I) la position d'ouverture de la vanne de régulation de débit (2) passe en dessous d'une position d'ouverture à effet d'étanchéité (S_{V-joint}) prédéterminée sur la course de réglage, pour laquelle aucun débit n'est attendu à travers la vanne de régulation de débit (2) ; ou
II) la position d'ouverture de la vanne de régulation de débit (2) passe en dessous d'une position d'ouverture hydrauliquement limitée (S_{V-hydraulique}), prédéterminée sur la course de réglage, à laquelle on peut s'attendre à un débit à travers la vanne de régulation de débit (2), et en même temps
i) la différence de température (ΔT_{Ist}) détectée est inférieure à l'écart de température (ΔT_{Soll}) prédéterminé; ou
ii) un intervalle de répétition pour augmenter à nouveau la position d'ouverture est écoulé.

2. Dispositif de réglage (1) selon la revendication 1, dans lequel
l'organe de réglage (6), qui est agencé de manière à pouvoir être couplé à la vanne de régulation de débit (2) de telle sorte qu'une position d'ouverture de la vanne de régulation de débit (2) entre la position fermée (S_{V min}) et la position ouverte peut être réglée et détectée, graduellement ou par étapes, par le dispositif de réglage (1), peut être commandé électriquement ; comprenant en outre :
une interface (9) pour recevoir un signal d'activation externe pour activer le moyen de calcul (8) et/ou le dispositif de réglage (1) ; dans lequel
le dispositif de réglage (1) comprend un moyen de détection de temps et un moyen de stockage qui sont adaptés pour détecter et stocker une durée d'activation précédente ou actuelle du signal d'activation et/ou une durée de désactivation entre deux activations ; et
le moyen de calcul (8) est adapté pour déterminer de manière variable l'écart de température (ΔT_{Soll}) sur la base d'une durée d'activation et/ou d'une durée de désactivation.

3. Dispositif de réglage (1) selon la revendication 1 ou 2, dans lequel
la position d'ouverture à effet d'étanchéité (S_{V-Dichtung}) de la vanne de régulation de débit (2) est fixée dans une plage de 1 % à 6 % de la course de réglage de la vanne de régulation de débit (2) en partant de la position entièrement fermée (S_{V-min}).

4. Dispositif de réglage (1) selon l'une des revendications 1 à 3, dans lequel
la position d'ouverture hydrauliquement limitée (S_{V-hydraulisch}) de la vanne de régulation de débit (2) est fixée dans une plage de 6 % à 20 % de la course de réglage de la vanne de régulation de débit (2) à partir de la position entièrement fermée (S_{V-min}).

5. Dispositif de réglage (1) selon l'une des revendications 1 à 4, dans lequel
le dépassement vers le bas de l'écart de la température (ΔT_{Soll}) est prédéterminé par la différence de température (ΔT_{Ist}) détectée à une différence, et la différence est fixée dans une plage de 10 % à 90 % d'une valeur de l'écart de la température (ΔT_{Soll}).

6. Dispositif de réglage (1) selon l'une des revendications 2 à 5, dans lequel
le dispositif de réglage (1) détermine, comme résultat de la détermination variable de l'écart de la température (ΔT_{Soll}), une plage de valeurs entre un écart minimal de la température (ΔT_{Soll-min}) et un écart maximal de la température (ΔT_{Soll-max}), et le dépassement vers le bas se rapporte à l'écart minimal de la température (ΔT_{Soll-min}).

7. Dispositif de réglage (1) selon l'une des revendications 1 à 6, dans lequel
l'intervalle de répétition est prédéterminé, est fixé à une durée de fonctionnement dans une plage de 1 h à 10 h, et l'intervalle de répétition commence lors d'une activation du dispositif de réglage (1).

8. Dispositif de réglage (1) selon l'une des revendications 1 à 7, dans lequel
la position d'ouverture augmentée à laquelle le dispositif de réglage (1) augmente la position d'ouverture de la vanne de régulation de débit (2) le long de la course de réglage est la position d'ouverture hydrauliquement limitée (S_{V-hydraulisch}).

9. Dispositif de réglage (1) selon l'une des revendications 1 à 8, dans lequel
une période de blocage est prévue ; et
le dispositif de réglage (1) est adapté pour ne pas augmenter, pendant la période de blocage, la position d'ouverture de la vanne de régulation de débit (2) qui est réglée sur la base de la différence de régulation (ΔT_{Regeldifferenz}),
II) lorsque la position d'ouverture de la vanne de régulation de débit (2) passe en dessous de position d'ouverture hydrauliquement limitée (S_{V-hydraulisch}), prédéterminée sur la course de réglage, à laquelle il faut s'attendre à un débit à travers la vanne de régulation de débit (2), et en même temps
i) la différence de température (ΔT_{Ist}) détectée est inférieure à l'écart de température prédéterminé ou à l'écart de température (ΔT_{Soll}) déterminé de manière variable.

10. Dispositif de réglage (1) selon la revendication 9, dans lequel
la durée de blocage est prédéterminée, est fixée à une durée de fonctionnement dans une plage de 5 min à 60 min, et la durée de blocage commence lors d'une activation du dispositif de réglage (1).

11. Procédé de réglage autorégulé d'un débit de fluide caloporteur à travers une boucle de consommation (3) avec échangeur de chaleur (30) dans un système de régulation de température (10) pour bâtiment comprenant une source de régulation de température (4) et une pompe (5) au moyen d'un dispositif de réglage (1) selon l'une des revendications 1 à 10 ;
le procédé comprenant au moins les étapes suivantes :
détection d'une température (T_{Vorlauf}) d'arrivée côté entrée et d'une température (T_{Rücklauf}) de retour côté sortie du fluide caloporteur circulant dans la boucle de consommation (3) ;
calculer une différence de régulation (ΔT_{Regeldifferenz}) entre une différence de température (ΔT_{Ist}) à partir de la température (T_{Vorlauf}) d'arrivée côté entrée et de la température (T_{Rücklauf}) de retour côté sortie détectées, ainsi qu'un écart de température (ΔT_{Soll}) prédéterminé; et
réglage d'une position d'ouverture - associée à une section de passage déterminée - de la vanne de régulation de débit (2) dans la boucle de consommation (3) en fonction d'une section de passage calculée sur la base de la différence de régulation (ΔT_{Regeldifferenz}) ;
**caractérisé par les étapes suivantes :**
augmenter la position d'ouverture de la vanne de régulation de débit (2), qui est réglée sur la base de la différence de régulation (ΔT_{Regeldifferenz}), le long d'une course de réglage jusqu'à une position d'ouverture avec une section transversale d'écoulement plus grande ; et
régler à nouveau la position d'ouverture de la vanne de régulation de débit (2) sur la base de la différence de régulation (ΔT_{Regeldifferenz}), en partant de la position d'ouverture augmentée, lorsque :
I) la position d'ouverture de la vanne de régulation de débit (2) passe en dessous d'une position d'ouverture prédéterminée sur la course de réglage, à effet d'étanchéité (S_{V-Dichtung}), pour laquelle aucun débit n'est attendu à travers la vanne de régulation de débit (2) ; ou
II) la position d'ouverture de la vanne de régulation de débit (2) passe en dessous d'une position d'ouverture hydrauliquement limitée (S_{V-hydraulisch}), prédéterminée sur la course de réglage, pour laquelle on peut s'attendre à un écoulement à travers la vanne de régulation de débit (2), et en même temps
i) la différence de température (ΔT_{Ist}) détectée est inférieure à l'écart de température (ΔT_{Soll}) prédéterminé; ou
ii) un intervalle de répétition pour augmenter à nouveau la position d'ouverture est écoulé.

12. Procédé selon la revendication 11, dans lequel
la boucle de consommation (3) peut être activée de manière externe ;
et le procédé comprend en outre au moins les étapes suivantes :
détection d'une durée d'activation précédente ou actuelle et/ou d'une durée de désactivation de la boucle de consommation (3) ; et
déterminer un écart de température (ΔT_{Soll}) variable entre la température (T_{Rücklauf}) de retour côté sortie et la température (T_{Vorlauf}) d'arrivée côté entrée sur la base de la durée d'activation et/ou de la durée de désactivation.

13. Procédé selon la revendication 11 ou 12, dans lequel
la position d'ouverture à effet d'étanchéité (S_{V-Dichtung}) de la vanne de régulation de débit (2) est fixée dans une plage de 1 % à 6 % de la course de réglage de la vanne de régulation de débit (2) en partant de la position entièrement fermée (S_{V-min}).

14. Procédé selon l'une des revendications 11 à 13, dans lequel
la position d'ouverture hydrauliquement limitée (S_{V-hydraulisch}) de la vanne de régulation de débit (2) est fixée dans une plage de 6 % à 20 % de la course de réglage de la vanne de régulation de débit (2) en partant de la position entièrement fermée (S_{V-min}).

15. Procédé selon l'une des revendications 11 à 14, dans lequel
le dépassement vers le bas de l'écart de la température (ΔT_{Soll}) est prédéterminé par la différence de température (ΔT_{Ist}) détectée à une différence, et la différence est fixée dans une plage de 10 % à 90 % d'une valeur de l'écart de la température (ΔT_{Soll}).

16. Procédé selon l'une des revendications 12 à 15, dans lequel
comme résultat de la détermination variable de l'écart de la température (ΔT_{Soll}), on détermine une plage de valeurs entre un écart minimal de la température (ΔT_{Soll-min}) et un écart maximal de la température (ΔT_{Soll-max}), et la sous-déclaration se rapporte à l'écart minimal de la température (ΔT_{Soll-min}).

17. Procédé selon l'une des revendications 11 à 16, dans lequel
l'intervalle de répétition est prédéterminé, fixé à une durée de fonctionnement dans une plage de 1 h à 10 h, et l'intervalle de répétition commence lors d'une activation du dispositif de réglage (1).

18. Procédé selon l'une des revendications 11 à 17, dans lequel
la position d'ouverture augmentée à laquelle le dispositif de réglage (1) augmente la position d'ouverture de la vanne de régulation de débit (2) le long de la course de réglage est la position d'ouverture hydrauliquement limitée (S_{V-hydraulisch}).

19. Procédé selon l'une des revendications 11 à 18, dans lequel
une période de blocage est fournie ; et
pendant la période de blocage, la position d'ouverture de la vanne de régulation de débit (2), qui est réglée sur la base de la différence de régulation (ΔT_{Regeldifferenz}), n'est pas augmentée,
II) lorsque la position d'ouverture de la vanne de régulation de débit (2) passe en dessous de la position d'ouverture hydrauliquement limitée (S_{V-hydraulisch}), prédéterminée sur la course de réglage, à laquelle il faut s'attendre à un débit à travers la vanne de régulation de débit (2), et en même temps
i) la différence de température (ΔT_{Ist}) détectée est inférieure à l'écart de température prédéterminé ou à l'écart de température (ΔT_{Soll}) déterminé de manière variable.

20. Procédé selon la revendication 19, dans lequel
la durée de blocage est prédéterminée, fixée à une durée de fonctionnement dans une plage de 5 min à 60 min, et la durée de blocage commence lors d'une activation du dispositif de réglage (1).
